# EUROPEAN PATENT APPLICATION

(11) **EP 4 554 268 A1**
(43) Date of publication of application: **14.05.2025**
(21) Application number: 22950258.8
(22) Date of filing: 07.07.2022
(51) Int. Cl.: H04W 16/28, H04W 72/1273

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN)
(74) Representative: Hoffmann Eitle
(86) International application number: PCT/JP2022/026994
(87) International publication number: WO 2024/009464

(57) **Abstract**

A terminal according to one aspect of the present disclosure includes a receiving section that receives a configuration parameter related to a unified transmission configuration indication (TCI) state, and receives an indication related to the unified TCI state and downlink control information (DCI) for scheduling or triggering a downlink (DL) signal, and a control section that, when at least one TCI codepoint corresponds to a plurality of TCI states and a value of a time period from reception of the DCI to reception of the DL signal is smaller than a threshold, determines a TCI state or QCL assumption to be applied to a specific DL signal, based on the TCI state corresponding to a specific TCI codepoint or the unified TCI state corresponding to an index related to a specific transmission/reception point (TRP). According to one aspect of the present disclosure, application of a TCI state can be appropriately performed.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied that a user terminal (terminal, User Equipment (UE)) controls transmission/reception processing, based on information related to quasi-co-location (QCL) (QCL assumption / Transmission Configuration Indication (TCI) state / spatial relation).

Application of a configured/activated/indicated TCI state to a plurality of types of signals (channels/RSs) has been under study. However, a method of indicating the TCI state may not be clear in some cases. Unless the method of indicating the TCI state is clear, this may lead to reduction in communication quality, reduction in throughput, and the like.

In view of this, the present disclosure has one object to provide a terminal, a radio communication method, and a base station that appropriately perform application of a TCI state. Solution to Problem

A terminal according to one aspect of the present disclosure includes a receiving section that receives a configuration parameter related to a unified transmission configuration indication (TCI) state, and receives an indication related to the unified TCI state and downlink control information (DCI) for scheduling or triggering a downlink (DL) signal, and a control section that, when at least one TCI codepoint corresponds to a plurality of TCI states and a value of a time period from reception of the DCI to reception of the DL signal is smaller than a threshold, determines a TCI state or QCL assumption to be applied to a specific DL signal, based on the TCI state corresponding to a specific TCI codepoint or the unified TCI state corresponding to an index related to a specific transmission/reception point (TRP).

### Advantageous Effects of Invention

According to one aspect of the present disclosure, application of a TCI state can be appropriately performed.

### Brief Description of Drawings

[FIG. 1] FIG. 1A to FIG. 1C are diagrams to show examples of schemes 0 to 2 related to an SFN.
[FIG. 2] FIG. 2 is a diagram to show an example of simultaneous beam update over a plurality of CCs.
[FIG. 3] FIG. 3A and FIG. 3B are diagrams to show examples of a common beam.
[FIG. 4] FIG. 4A and FIG. 4B are diagrams to show examples of single-DCI based multi-TRP transmission and multi-DCI based multi-TRP transmission, respectively.
[FIG. 5] FIG. 5A and FIG. 5B are diagrams to show examples of a TCI field in DCI.
[FIG. 6] FIG. 6A and FIG. 6B are diagrams to show examples of configuration/indication of joint TCI states in a single-DCI based multi-TRP.
[FIG. 7] FIG. 7A and FIG. 7B are diagrams to show examples of configuration/indication of separate TCI states in the single-DCI based multi-TRP.
[FIG. 8] FIG. 8A and FIG. 8B are diagrams to show examples of configuration/indication of the joint TCI states corresponding to a CORESET pool index having a first value in a multi-DCI based multi-TRP.
[FIG. 9] FIG. 9A and FIG. 9B are diagrams to show examples of configuration/indication of the joint TCI states corresponding to a CORESET pool index having a second value in the multi-DCI based multi-TRP.
[FIG. 10] FIG. 10 is a diagram to show an overview of UE operation according to first to fifth embodiments.
[FIG. 11] FIG. 11A and FIG. 11B are diagrams to show examples of a method of selecting a TCI codepoint when the joint/DL TCI states are indicated.
[FIG. 12] FIG. 12 is a diagram to show an example of application of the TCI states according to option 5-1-1.
[FIG. 13] FIG. 13 is a diagram to show an example of configuration according to a sixth embodiment.
[FIG. 14] FIG. 14 is a diagram to show an example of a schematic structure of a radio communication system according to one embodiment.
[FIG. 15] FIG. 15 is a diagram to show an example of a structure of a base station according to one embodiment.
[FIG. 16] FIG. 16 is a diagram to show an example of a structure of a user terminal according to one embodiment.
[FIG. 17] FIG. 17 is a diagram to show an example of a hardware structure of the base station and the user terminal according to one embodiment.
[FIG. 18] FIG. 18 is a diagram to show an example of a vehicle according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a given signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a given control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a given channel/signal, and this RS may be referred to as a QCL source of QCL type X in the TCI state.

For the PDCCH and the PDSCH, a QCL type A RS may be configured necessarily and a QCL type D RS may be configured optionally. Since it is difficult to estimate Doppler shift, delay, and the like, based on one-shot reception of a DMRS, the QCL type A RS is used for improvement of channel estimation accuracy. The QCL type D RS is used to determine a receive beam at the time of DMRS reception.

For example, TRSs 1-1, 1-2, 1-3, and 1-4 are transmitted, and TRS 1-1 is notified as a QCL type C/D RS, based on the TCI state of the PDSCH. When the UE is notified of the TCI state, the UE can use information obtained as a result of past periodic reception/measurement of TRS 1-1 for reception/channel estimation of a DMRS for the PDSCH. In this case, the QCL source of the PDSCH is TRS 1-1, and a QCL target is the DMRS for the PDSCH.

### (Default TCI State/Default Spatial Relation/Default PL-RS)

In Rel. 16, the PDSCH may be scheduled with DCI having a TCI field. The TCI state for the PDSCH is indicated by the TCI field. The TCI field of DCI format 1_1 has 3 bits, and the TCI field of DCI format 1_2 has up to 3 bits.

In an RRC connected mode, when an information element of the TCI in first DCI (a higher layer parameter tci-PresentInDCI) is set to "enabled" for the CORESET to schedule the PDSCH, the UE assumes that the TCI field is present in DCI format 1_1 of the PDCCH to be transmitted in the CORESET.

When an information element of the TCI in second DCI (a higher layer parameter tci-PresentInDCI-1-2) for the CORESET to schedule the PDSCH is configured for the UE, the UE assumes that the TCI field having a DCI field size indicated by the information element of the TCI in the second DCI is present in DCI format 1_2 of the PDSCH to be transmitted in the CORESET.

In Rel. 16, the PDSCH may be scheduled with DCI not having a TCI field. The DCI format of the DCI may be DCI format 1_0, or DCI format 1_1/1_2 in a case where the information element of the TCI in the DCI (the higher layer parameter tci-PresentInDCI or tci-PresentInDCI-1-2) is not configured (enabled). When the PDSCH is scheduled with the DCI not having a TCI field, and a time offset between reception of DL DCI (DCI (scheduling DCI) to schedule the PDSCH) and a corresponding PDSCH (PDSCH scheduled by the DCI) is equal to or more than a threshold (timeDurationForQCL), the UE assumes that the TCI state or the QCL assumption for the PDSCH is the same as the TCI state or the QCL assumption (default TCI state) of the CORESET (for example, the scheduling DCI).

In the RRC connected mode, in both a case where the information elements of the TCI in the DCI (the higher layer parameters tci-PresentInDCI and tci-PresentInDCI-1-2) are set to "enabled" and a case where the information elements of the TCI in the DCI are not configured, when the time offset between reception of DL DCI (DCI to schedule the PDSCH) and a corresponding PDSCH (PDSCH scheduled by the DCI) is less than the threshold (timeDurationForQCL) (application condition, first condition), and in a case of non-cross-carrier scheduling, the TCI state (default TCI state) for the PDSCH may be the TCI state with the lowest CORESET ID in the latest slot in an active DL BWP for the CC (for a specific UL signal). Otherwise, the TCI state (default TCI state) for the PDSCH may be the TCI state with the lowest TCI state ID of the PDSCH in the active DL BWP for the scheduled CC.

In Rel. 15, separate MAC CEs, specifically, a MAC CE for activation/deactivation of a PUCCH spatial relation and a MAC CE for activation/deactivation of an SRS spatial relation, are needed. The PUSCH spatial relation follows the SRS spatial relation.

In Rel. 16, at least one of a MAC CE for activation/deactivation of a PUCCH spatial relation and a MAC CE for activation/deactivation of an SRS spatial relation need not necessarily be used.

If neither a spatial relation nor a PL-RS for a PUCCH is configured in FR2 (application condition, second condition), default assumptions of a spatial relation and a PL-RS (default spatial relation and default PL-RS) are used for the PUCCH. If neither a spatial relation nor a PL-RS for an SRS (SRS resource for the SRS or SRS resource corresponding to an SRI in DCI format 0_1 for scheduling a PUSCH) is configured in FR2 (application condition, second condition), the default assumptions of a spatial relation and a PL-RS (default spatial relation and default PL-RS) are used for the PUSCH scheduled by DCI format 0_1 and the SRS.

If a CORESET is configured in the active DL BWP in the CC (application condition), the default spatial relation and the default PL-RS may be the TCI state or the QCL assumption of the CORESET having the lowest CORESET ID in the active DL BWP. If no CORESET is configured in the active DL BWP in the CC, the default spatial relation and the default PL-RS may be the active TCI state having the lowest ID of the PDSCHs in the active DL BWP.

In Rel. 15, the spatial relation of a PUSCH scheduled in DCI format 0_0 follows the spatial relation of the PUCCH resource having the lowest PUCCH resource ID among active spatial relations of the PUCCHs in the same CC. Even when no PUCCH is transmitted in an SCell, a network need update all the PUCCH spatial relations in the SCell.

In Rel. 16, no PUCCH configuration for a PUSCH scheduled by DCI format 0_0 is needed. When no active PUCCH spatial relation is present or no PUCCH resource is present for a PUSCH scheduled by DCI format 0_0 in the active UL BWP in the CC (application condition, second condition), the default spatial relation and the default PL-RS are used for the PUSCH.

An application condition of a default spatial relation / default PL-RS for SRS may include an enable default beam pathloss for SRS information element (higher layer parameter enableDefaultBeamPlForSRS) is set as enabled. An application condition of a default spatial relation / default PL-RS for PUCCH may include an enable default beam pathloss for PUCCH information element (higher layer parameter enableDefaultBeamPlForPUCCH) is set as enabled. An application condition of a default spatial relation / default PL-RS for PUSCH scheduled by DCI format 0_0 may include an enable default beam pathloss for PUSCH scheduled by DCI format 0_0 information element (higher layer parameter enableDefaultBeamPlForPUSCH0_0) is set as enabled.

In Rel. 16, when an RRC parameter (a parameter (enableDefaultBeamPL-ForPUCCH) for enabling a default beam PL for the PUCCH, a parameter (enableDefaultBeamPL-ForPUSCH0_0) for enabling a default beam PL for the PUSCH, or a parameter (enableDefaultBeamPL-ForSRS) for enabling a default beam PL for the SRS) is configured for the UE, and the spatial relation or the PL-RS is not configured, the UE applies the default spatial relation/PL-RS.

The threshold may be referred to as time duration for QCL, "timeDurationForQCL," "Threshold," "Threshold for offset between a DCI indicating a TCI state and a PDSCH scheduled by the DCI," "Threshold-Sched-Offset," "beamSwitchTiming", a schedule offset threshold, a scheduling offset threshold, or the like. The threshold may be reported by the UE as a UE capability (for each subcarrier spacing).

When an offset (scheduling offset) between reception of DL DCI and the PDSCH corresponding thereto is less than the threshold timeDurationForQCL, at least one TCI state configured for the serving cell of the scheduled PDSCH includes "QCL type **D",** the UE is configured with an information element for enabling two default TCIs (enableTwoDefaultTCIStates-r16), and at least one TCI codepoint (codepoint in the TCI field in the DL DCI) indicates two TCI states, the UE assumes that a DMRS port of a PDSCH or PDSCH transmission occasion of the serving cell is quasi co-located with an RS related to a QCL parameter associated with two TCI states corresponding to the lowest codepoint out of the TCI codepoints including two different TCI states (rule for determining two default QCL assumptions). The information element for enabling two default TCIs indicates that operations of Rel. 16 for two default TCI states for the PDSCH when at least one TCI codepoint is mapped to two TCI states are enabled.

As the default TCI states for the PDSCH in Rel. 15/16, a default TCI state for a single TRP, a default TCI state for a multi-DCI based multi-TRP, and a default TCI state for a single-DCI based multi-TRP are specified.

As the default TCI states for an aperiodic CSI-RS (A-CSI-RS) in Rel. 15/16, the default TCI state for a single TRP, the default TCI state for a multi-DCI based multi-TRP, and the default TCI state for a single-DCI based multi-TRP are specified.

In Rel. 15/16, the default spatial relation and the default PL-RS for each of the PUSCH/PUCCH/SRS are specified.

### (Multi-TRP)

For NR, it is studied that one or a plurality of transmission/reception points (TRPs) (multi-TRP (multi TRP (MTRP))) perform DL transmission to a UE by using one or a plurality of panels (multi-panel). It is also studied that the UE performs UL transmission to the one or plurality of TRPs by using one or a plurality of panels.

Note that the plurality of TRPs may correspond to the same cell identifier (ID) or may correspond to different cell IDs. The cell ID may be a physical cell ID or a virtual cell ID.

The multi-TRP (for example, TRPs #1 and #2) may be connected via ideal/non-ideal backhaul to exchange information, data, and the like. Each TRP of the multi-TRP may transmit a different codeword (Code Word (CW)) and a different layer. As one mode of multi-TRP transmission, non-coherent joint transmission (NCJT) may be employed.

In NCJT, for example, TRP #1 performs modulation mapping on a first codeword, performs layer mapping, and transmits a first PDSCH in layers of a first number (for example, two layers) by using first precoding. TRP #2 performs modulation mapping on a second codeword, performs layer mapping, and transmits a second PDSCH in layers of a second number (for example, two layers) by using second precoding.

Note that a plurality of PDSCHs (multi-PDSCH) transmitted by NCJT may be defined to partially or entirely overlap in terms of at least one of the time and frequency domains. In other words, the first PDSCH from a first TRP and the second PDSCH from a second TRP may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a given QCL type (for example, QCL type D).

A plurality of PDSCHs (which may be referred to as multi-PDSCH (multiple PDSCHs)) from the multi-TRP may be scheduled by using one DCI (single DCI, single PDCCH) (single master mode, single-DCI based multi-TRP). The plurality of PDSCHs from the multi-TRP may be separately scheduled by using a plurality of DCIs (multi-DCI, multi-PDCCH (multiple PDCCHs)) (multi-master mode, multi-DCI based multi-TRP).

For URLLC for multi-TRP, it is studied to support PDSCH (transport block (TB) or codeword (CW)) repetition over multi-TRP. It is studied to support a scheme of repetition over multi-TRP in the frequency domain, the layer (space) domain, or the time domain (URLLC schemes, for example, schemes 1, 2a, 2b, 3, and 4). In scheme 1, multi-PDSCH from multi-TRP is space division multiplexed (SDMed). In schemes 2a and 2b, PDSCHs from multi-TRP are frequency division multiplexed (FDMed). In scheme 2a, a redundancy version (RV) is the same for the multi-TRP. In scheme 2b, an RV may be the same or may be different for the multi-TRP. In schemes 3 and 4, multi-PDSCH from multi-TRP is time division multiplexed (TDMed). In scheme 3, multi-PDSCH from multi-TRP is transmitted in one slot. In scheme 4, multi-PDSCH from multi-TRP is transmitted in different slots.

According to such a multi-TRP scenario, more flexible transmission control using a channel with high quality is possible.

To support intra-cell (with the same cell ID) and inter-cell (with different cell IDs) multi-TRP transmission based on a plurality of PDCCHs, one control resource set (CORESET) in PDCCH configuration information (PDCCH-Config) may correspond to one TRP in RRC configuration information for linking a plurality of pairs of a PDCCH and a PDSCH with a plurality of TRPs.

When at least one of conditions 1 and 2 below is satisfied, the UE may determine that it is a multi-DCI based multi-TRP. In this case, a TRP may be interpreted as a CORESET pool index.

### [Condition 1]

One CORESET pool index is configured.

### [Condition 2]

Two different values (for example 0 and 1) of a CORESET pool index are configured.

When the following condition is satisfied, the UE may determine that it is a single-DCI based multi-TRP. In this case, two TRPs may be interpreted as two TCI states indicated by a MAC CE/DCI.

### [Condition]

To indicate one or two TCI states for one codepoint of a TCI field in DCI, an "enhanced TCI states activation/deactivation for UE-specific PDSCH MAC CE" is used.

DCI for common beam indication may be a UE-specific DCI format (for example, DL DCI format (for example, 1_1, 1_2)), may be a UL DCI format (for example, 0_1, 0_2), or may be a UE-group common DCI format.

### (Multi-TRP PDCCH)

For reliability of multi-TRP PDCCH based on a non-single frequency network (SFN), the following studies 1 to 3 have been under study.
[Study 1] Coding/rate matching is based on one repetition, and the same coding bit is repeated in other repetitions.
[Study 2] Each repetition has the same number of control channel elements (CCEs) and the same coding bit, and corresponds to the same DCI payload.
[Study 3] Two or more PDCCH candidates are explicitly linked to each other. The UE is informed of the link before decoding.

The following alternatives 1-2, 1-3, 2, and 3 for PDCCH repetition have been under study.

### [Alternative 1-2]

Two sets of PDCCH candidates (in a given search space (SS) set) are respectively associated with two TCI states of the CORESET. Here, the PDCCH repetition in the same CORESET, the same SS set, and different monitoring occasions is used.

### [Alternative 1-3]

Two sets of PDCCH candidates are respectively associated with two SS sets. Both of the SS sets are associated with the CORESET, and each SS set is associated with only one TCI state of the CORESET. Here, the same CORESET and two SS sets are used.

### [Alternative 2]

One SS set is associated with two different CORESETs.

### [Alternative 3]

Two SS sets are respectively associated with two CORESETs.

In this manner, it has been under study that two PDCCH candidates in two SS sets for the PDCCH repetition are supported and the two SS sets are explicitly linked.

### (SFN PDCCH)

Regarding the PDCCH/CORESET defined in Rel. 15, one TCI state without a CORESET pool index (CORESETPoolIndex) (which may be referred to as TRP information (TRP Info)) is configured for one

### CORESET.

Regarding enhancements of the PDCCH/CORESET defined in Rel. 16, in the multi-DCI based multi-TRP, the CORESET pool index is configured for each CORESET.

In Rel. 17 or later versions, the following enhancements 1 and 2 related to the PDCCH/CORESET have been under study.

In a case in which a plurality of antennas (small antennas, transmission/reception points) having the same cell ID form a single frequency network (SFN), up to two TCI states may be configured/activated for one CORESET, using higher layer signaling (RRC signaling/MAC CE) (enhancement 1). The SFN contributes to at least one of operation and reliability enhancement of an HST (high speed train).

In repetition transmission of the PDCCH (which may be simply referred to as "repetition"), two PDCCH candidates in two search space sets are linked to each other, and each search space set is associated with a corresponding CORESET (enhancement 2). The two search space sets may be associated with the same or different CORESET(s). For one CORESET, one (up to one) TCI state may be configured/activated using higher layer signaling (RRC signaling/MAC CE).

If the two search space sets are associated with different CORESETs having different TCI states, this may mean repetition transmission of a multi-TRP. If the two search space sets are associated with the same CORESET (CORESET having the same TCI state), this may mean repetition transmission of a single TRP.

### (HST)

In LTE, installation of an HST (high speed train) in a tunnel is difficult. A large antenna performs transmission to the outside/inside a tunnel. For example, transmission power of a large antenna is approximately from 1 to 5 W. For handover, it is important to perform transmission to the outside of the tunnel before the UE enters the tunnel. For example, transmission power of a small antenna is approximately 250 mW. A plurality of small antennas (transmission/reception points) having the same cell ID and having a distance of 300 m form a single frequency network (SFN). All of the small antennas in the SFN transmit the same signal in the same PRB at the same time. A terminal assumes transmission and reception to and from one base station. In actuality, a plurality of transmission/reception points transmit the same DL signal. In high-speed movement, a transmission/reception point in a unit of several kilometers forms one cell. In movement across cells, handover is performed. This can reduce frequency of handover.

In NR, in order to perform communication with a terminal (hereinafter also referred to as a UE) included in a moving object (HST (high speed train)), such as a train, that moves at a high speed, using beams transmitted from transmission points (for example, RRHs) is assumed. In existing systems (for example, Rel. 15), performing communication with the moving object by transmitting uni-directional beams from the RRHs is supported.

The RRH that forms the uni-directional beam may be referred to as a uni-directional RRH. When a beam is formed in a direction opposite to the traveling direction of the moving object (UE), the moving object receives a negative Doppler shift (-f_{D}) from each RRH.

In Rel. 16 or later versions, it is also assumed that a plurality of (for example, two or more) beams are transmitted from the RRH. For example, it is assumed that the beams are formed in both of the traveling direction of the moving object and a direction opposite to the traveling direction.

The RRH that forms the beams of the plurality of directions (for example, two directions) may be referred to as a bidirectional RRH.

In the HST, the UE performs communication, similarly to a single TRP. In base station implementation, transmission from a plurality of TRPs (same cell ID) can be performed.

When two RRHs use the SFN and the moving object is located between the two RRHs, a signal subjected to a negative Doppler shift switches to a signal subjected to a positive Doppler shift having higher power. In this case, the largest change in the Doppler shift to require correction is a change from -f_{D} to +f_{D}, which is twice as large as that in the case of the uni-directional RRH.

Note that, in the present disclosure, a positive Doppler shift may be interpreted as information related to a positive Doppler shift, a Doppler shift in a positive direction, and Doppler information in a positive direction. A negative Doppler shift may be interpreted as information related to a negative Doppler shift, a Doppler shift in a negative direction, and Doppler information in a negative direction.

Here, as schemes for the HST, the following scheme 0 to scheme 2 (HST scheme 0 to HST scheme 2) are compared.

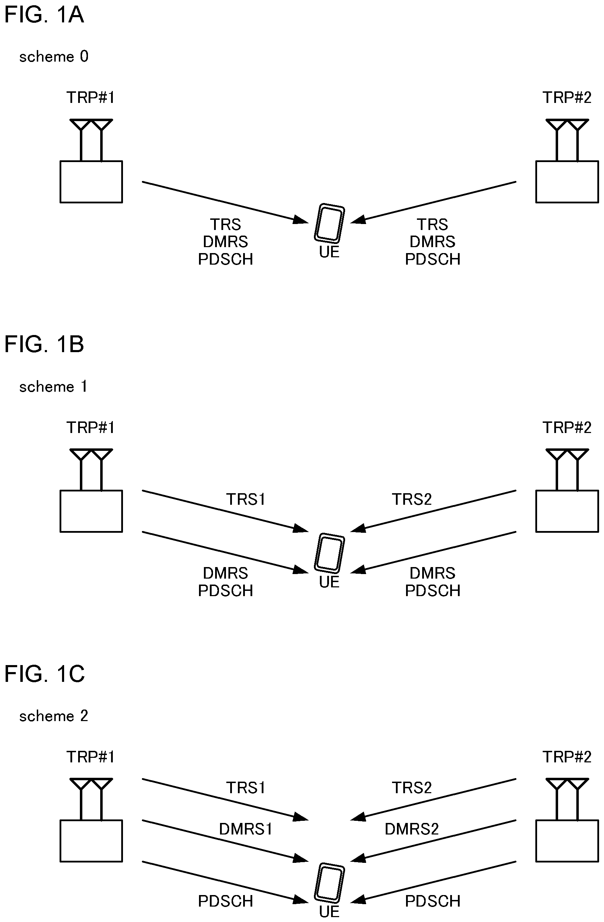

In scheme 0 of FIG. 1A, a tracking reference signal (TRS), a DMRS, and a PDSCH are transmitted to be common to two TRPs (RRHs) (using the same time and the same frequency resources) (a normal SFN, a transparent SFN, an HST-SFN).

In scheme 0, the UE receives DL channels/signals corresponding to a single TRP, and thus there is one TCI state of the PDSCH.

Note that, in Rel. 16, an RRC parameter for distinguishing transmission using a single TRP and transmission using an SFN is defined. When the UE reports corresponding UE capability information, the UE may distinguish reception of DL channels/signals of the single TRP and reception of the PDSCH assuming the SFN, based on the RRC parameter. In contrast, the UE may assume the single TRP and perform transmission and reception using the SFN.

In scheme 1 of FIG. 1B, TRSs are transmitted to be specific to respective TRPs (with the TRPs using different time/frequency resources). In the example, TRS 1 is transmitted from TRP #1, and TRS 2 is transmitted from TRP #2.

In scheme 1, the UE receives DL channels/signals from respective TRPs using the TRSs from respective TRPs, and thus there are two TCI states of the PDSCH.

In scheme 2 of FIG. 1C, TRSs and DMRSs are transmitted to be specific to respective TRPs. In the example, TRS 1 and DMRS 1 are transmitted from TRP #1, and TRS 2 and DMRS 2 are transmitted from TRP #2. In comparison to scheme 0, schemes 1 and 2 can reduce sudden changes of Doppler shifts, and can allow appropriate estimation/compensation of the Doppler shifts. The DMRSs of scheme 2 are increased more than the DMRSs of scheme 1, and thus maximum throughput of scheme 2 is lower than that of scheme 1.

In scheme 0, the UE switches the single TRP and the SFN, based on higher layer signaling (RRC information element/MAC CE).

The UE may switch scheme 1/scheme 2/NW pre-compensation scheme, based on higher layer signaling (RRC information element/MAC CE).

In scheme 1, two TRS resources are respectively configured for the traveling direction of the HST and a direction opposite to the traveling direction.

In Rel. 17 or later versions, the following has been under study in which the base station performs a Doppler pre-(preliminary) compensation (correction) scheme (a Pre-Doppler Compensation scheme, a Doppler pre-Compensation scheme, a network (NW) pre-compensation scheme (a NW pre-compensation scheme and an HST NW pre-compensation scheme), a TRP pre-compensation scheme, and a TRP-based pre-compensation scheme) in transmission of downlink (DL) signals/channels to the UE in the HST from the TRP. When the TRP performs Doppler compensation in advance at the time of transmission of DL signals/channels to the UE, influence of Doppler shifts in the UE at the time of reception of the DL signals/channels can be reduced. In the present disclosure, the Doppler pre-compensation scheme may be a combination of scheme 1 and pre-compensation of Doppler shifts by the base station.

In the Doppler pre-compensation scheme, the following has been under study in which the TRS from each TRP is transmitted without being subjected to Doppler pre-compensation, and the PDSCH from each TRP is transmitted by being subjected to Doppler pre-compensation.

In the Doppler pre-compensation scheme, the TRPs that form beams toward the traveling direction of the movement path and the TRPs that form beams toward the direction opposite to the traveling direction of the movement path perform transmission of the DL signals/channels to the UE in the HST after performing Doppler correction.

In addition, in Rel. 17 or later versions, dynamically switching the single TRP and the SFN by using the TCI field (TCI state field) has been under study. For example, one or two TCI states are configured/indicated in each TCI codepoint (codepoint of the TCI field, the DCI codepoint), using an RRC information element/MAC CE (for example, the Enhanced TCI States Activation/Deactivation for UE-specific PDSCH MAC CE)/DCI (TCI field). When one TCI state is configured/indicated, the UE may determine to receive the PDSCH of the single TRP. When two TCI states are configured/indicated, the UE may determine to receive the PDSCH of the SFN using the multi-TRP.

### (Simultaneous Beam Update of Plurality of CCs)

In Rel. 16, one MAC CE can update beam indices (TCI states) of a plurality of CCs.

The UE can be configured with up to two applicable CC lists (for example, applicable-CC-list) by RRC. When two applicable CC lists are configured, the two applicable CC lists may correspond to inter-band CA in FR1 and inter-band CA in FR2.

An activation MAC CE for a TCI state of a PDCCH activates TCI states associated with the same CORESET ID in all the BWPs/CCs in an applicable CC list.

An activation MAC CE for a TCI state of a PDSCH activates TCI states in all the BWPs/CCs in the applicable CC list.

An activation MAC CE for a spatial relation of an A-SRS/SP-SRS activates spatial relations associated with the same SRS resource ID in all the BWPs/CCs in the applicable CC list.

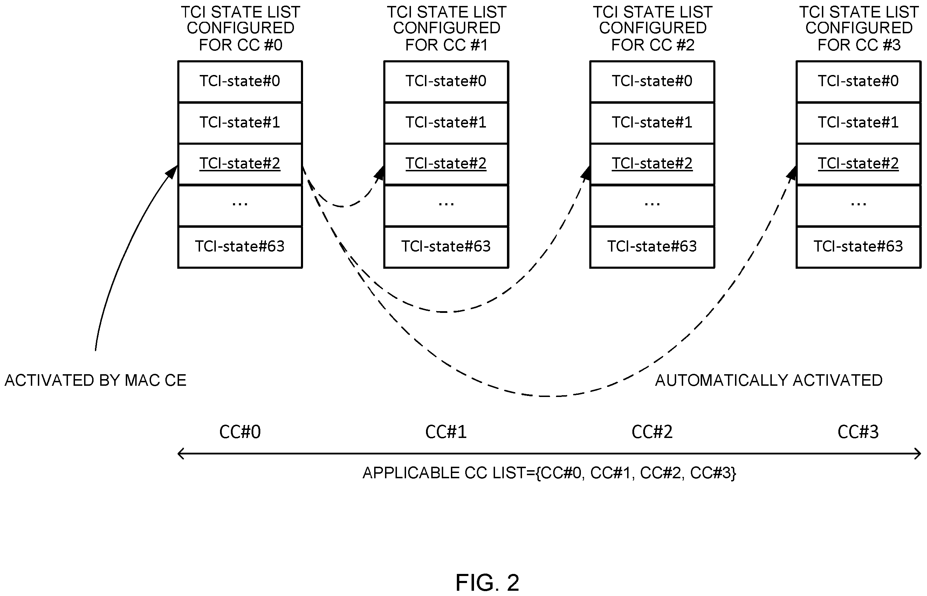

In the example in FIG. 2, the UE is configured with an applicable CC list indicating CCs #0, #1, #2, and #3 and a list indicating 64 TCI states for a CORESET or a PDSCH in each of the CCs. When one TCI state in CC #0 is activated by a MAC CE, corresponding TCI states are activated in CCs #1, #2, and #3.

It is studied that such simultaneous beam update is applicable only to a single-TRP case.

For a PDSCH, the UE may be based on Procedure A below.

### [Procedure A]

The UE receives an activation command for mapping up to eight TCI states to a codepoint in a DCI field (TCI field) in one CC / DL BWP or in one set of CCs/BWPs. When one set of TCI state IDs is activated for one set of CCs / DL BWPs, an applicable CC list is determined by a CC(s) indicated in an activation command, and a set of TCI states being the same is applied to all the DL BWPs in the indicated **CC.** Only if the UE is not provided with a plurality of different values of CORESET pool indices (CORESETPoolIndex) in a CORESET information element (ControlResourceSet) and is not provided with at least one TCI codepoint mapped to two TCI states, the one set of TCI state IDs can be activated for one set of CCs / DL BWPs.

For a PDCCH, the UE may be based on Procedure B below.

### [Procedure B]

If the UE is provided with up to two lists of cells for simultaneous TCI state activation by a simultaneous TCI update list (at least one of simultaneousTCI-UpdateList-r16 and simultaneousTCI-UpdateListSecond-r16), by a simultaneous TCI cell list (simultaneousTCI-CellList), the UE applies, to CORESETs with an index p in all the configured DL BWPs in all the configured cells in one list determined based on a serving cell index provided by a MAC CE command, an antenna port quasi co-location (QCL) provided by TCI states with the same activated TCI state ID value. Only if the UE is not provided with a plurality of different values of CORESET pool indices (CORESETPoolIndex) in a CORESET information element (ControlResourceSet) and is not provided with at least one TCI codepoint mapped to two TCI states, the UE can be provided with a simultaneous TCI cell list for simultaneous TCI state activation.

For a semi-persistent (SP) / aperiodic (AP)-SRS, the UE may be based on Procedure C below.

### [Procedure C]

When an SP configured by an SRS resource information element (higher layer parameter SRS-Resource) or spatial relation information (spatialRelationInfo) for an AP-SRS resource is activated/updated by a MAC CE for one set of CCs/BWPs, an applicable CC list is indicated by a simultaneous spatial update list (higher layer parameter smiultaneousSpatial-UpdateList-r16 or simultaneousSpatial-UpdateListSecond-r16), and the spatial relation information is applied to SPs or AP-SRS resources with the same SRS resource ID in all the BWPs in the indicated **CC.** Only if the UE is not provided with a plurality of different values of CORESET pool indices (CORESETPoolIndex) in a CORESET information element (ControlResourceSet) and is not provided with at least one TCI codepoint mapped to two TCI states, the SP configured by the SRS resource information element (higher layer parameter SRS-Resource) or spatial relation information (spatialRelationInfo) for the AP-SRS resource is activated/updated by an MAC CE for the one set of CCs/BWPs.

The simultaneous TCI cell list (simultaneousTCI-CellList) and simultaneous TCI update lists (at least one of simultaneousTCI-UpdateList1-r16 and simultaneousTCI-UpdateList2-r16) are lists of serving cells for which a TCI relationship can be updated simultaneously by using a MAC CE. simultaneousTCI-UpdateList1-r16 and simultaneousTCI-UpdateList2-r16 do not include the same serving cell.

The simultaneous spatial update list (at least one of higher layer parameters simultaneousSpatial-UpdatedList1-r16 and simultaneousSpatial-UpdatedList2-r16) is a list of serving cells for which a spatial relationship can be updated simultaneously by using a MAC CE. simultaneousSpatial-UpdatedList1-r16 and simultaneousSpatial-UpdatedList2-r16 do not include the same serving cell.

Here, the simultaneous TCI update lists and the simultaneous spatial update lists are configured by RRC, a CORESET pool index of a CORESET is configured by RRC, and a TCI codepoint mapped to TCI state(s) is indicated by a MAC CE.

### (Unified/common TCI Framework)

With a unified TCI framework, UL and DL channels can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for the UL and the DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam / unified TCI state may be indicated from the same TCI pool (joint common TCI pool, joint TCI pool, set) for both UL and DL. X (> 1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥ 1) of TCI states (UL TCI states) applied to UL channels/RSs and the number M (≥ 1) of TCI states (DL TCI states) applied to DL channels/RSs may be defined. At least one of N and M may be notified/configured/indicated to the UE via higher layer signaling/physical layer signaling.

In the present disclosure, description of N = M = X (X is any integer) may mean that X TCI states (joint TCI states) (corresponding to X TRPs) common to the UL and the DL are notified/configured/indicated to the UE.

Description of N = X (X is any integer) and M = Y (Y is any integer and Y may be equal to X) may mean that X UL TCI states (corresponding to X TRPs) and Y DL TCI states (corresponding to Y TRPs) are notified/configured/indicated to the UE. The UL TCI state and the DL TCI state may mean a TCI state (that is, a joint TCI state) common to the UL and the DL, or may mean a TCI state (that is, a separate TCI state) of each of the UL and the DL.

For example, description of N = M = 1 may mean that one TCI state common to the UL and the DL for a single TRP is notified/configured/indicated to the UE (joint TCI state for a single TRP).

For example, description of N = 1 and M = 1 may mean that one UL TCI state and one DL TCI state for a single TRP are separately notified/configured/indicated to the UE (separate TCI states for a single TRP).

For example, description of N = M = 2 may mean that a plurality of (two) TCI states common to the UL and the DL for a plurality of (two) TRPs are notified/configured/indicated to the UE (joint TCI states for a plurality of TRPs).

For example, description of N = 2 and M = 2 may mean that a plurality of (two) UL TCI states and a plurality of (two) DL TCI states for a plurality of (two) TRPs are notified/configured/indicated to the UE (separate TCI states for a plurality of TRPs).

For example, description of N = 2 and M = 1 may mean that two TCI states common to the UL and the DL are notified/configured/indicated to the UE. In this case, the UE may use the two configured/indicated TCI states as the UL TCI state, and use one TCI state out of the two configured/indicated TCI states as the DL TCI state.

For example, description of N = 2 and M = 1 may mean that two UL TCI states and one DL TCI state are notified/configured/indicated to the UE as the separate TCI state.

Note that, although the above examples describe cases in which the value of N and M is 1 or 2, the value of N and M may be 3 or greater, and N and M may be different.

A case of M > 1/N > 1 may indicate at least one of a TCI state indication for a plurality of TRPs and a plurality of TCI state indications for inter band CA.

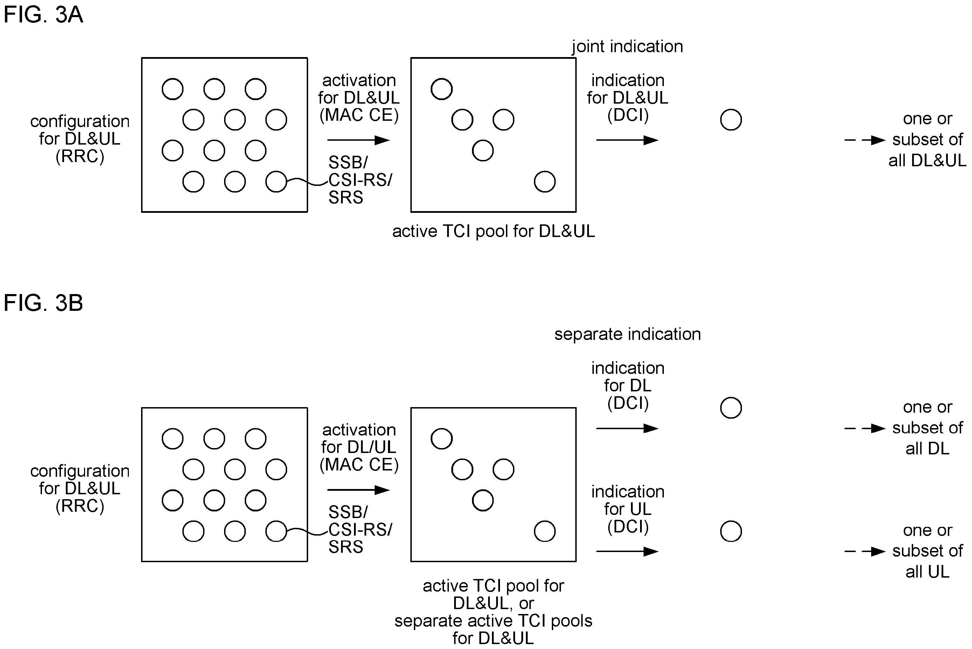

In the example in FIG. 3A, an RRC parameter (information element) configures a plurality of TCI states for both DL and UL. The MAC CE may activate a plurality of TCI states among the plurality of configured TCI states. DCI may indicate one of the plurality of activated TCI states. The DCI may be UL/DL DCI. The indicated TCI state may be applied to at least one (or all) of UL/DL channels/RSs. One DCI may indicate both a UL TCI and a DL TCI.

In the example in FIG. 3A, one dot may be one TCI state applied to both UL and DL or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In the example in FIG. 3B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different DCIs may separately indicate a UL TCI and a DL DCI.

Existing DCI format 1_1/1_2 may be used for indication of a common TCI state.

The DCI format for indicating the TCI state may be a specific DCI format. For example, the specific DCI format may be DCI format 1_1/1_2 (defined in Rel. 15/16/17).

The DCI format (DCI format 1_1/1_2) for indicating the TCI state may be a DCI format without DL assignment. In the present disclosure, it may be interchangeably interpreted as a DCI format without DL assignment, a DCI format (DCI format 1_1/1_2) for not scheduling the PDSCH, a DCI format (DCI format 1_1/1_2) not including one or more specific fields, a DCI format (DCI format 1_1/1_2) in which one or more specific fields are set to a fixed value, or the like.

Regarding the DCI format without DL assignment (the DCI format not including one or more specific fields), the specific field may be a field other than a TCI field, a DCI format identifier field, a carrier indicator field, a bandwidth part (BWP) indicator field, a time domain resource assignment (TDRA) field, a Downlink Assignment Index (DAI) field (if configured), a transmission power control (TPC) command field (for a scheduled PUCCH), a PUCCH resource indicator field, and a PDSCH-to-HARQ-ACK feedback timing indicator (PDSCH-to-HARQ feedback timing indicator) field (if being present). The specific field may be set as a reserved field, or may be ignored.

Regarding the DCI format without DL assignment (the DCI format in which one or more specific fields are set to a fixed value), the specific field may be a redundancy version (RV) field, a modulation and coding scheme (MCS) field, a new data indicator field, and a frequency domain resource assignment (FDRA) field.

The RV field may be set to all 1. The MCS field may be set to all 1. The NDI field may be set to 0. The FDRA field of type 0 may be set to all 0. The FDRA field of type 1 may be set to all 1. The FDRA field for dynamic switch (higher layer parameter dynamicSwitch) may be set to all 0.

A common TCI framework may include separate TCI states for the DL and the UL.

### (Default QCL in Rel. 17)

In Rel. 17, when an offset (scheduling offset) between reception of DL DCI and the PDSCH corresponding thereto is smaller than a specific threshold (for example, timeDurationForQCL) and the common TCI state (a parameter (DLorJointTCIState/UL-TCIState)) for configuration of the common TCI state) is not configured (this may be hereinafter referred to as case A), the UE determines the TCI state (QCL) to be applied to the PDSCH according to a given rule.

The following description may be applied to case A above.

### [Single-TRP PDSCH]

The UE determines to apply the TCI state associated with the smallest (lowest) CORESET ID in the latest monitoring slot of the active BWP in the component carrier (CC) to the PDSCH.

### [Multi-DCI Based Multi-TRP PDSCH]

When a higher layer parameter "enableDefaultTCI-StatePerCoresetPoolIndex" is configured, the UE determines to apply the TCI state associated with the lowest CORESET ID having the same CORESET pool index value in the latest monitoring slot of the active BWP in the CC to the PDSCH.

### [Single-DCI Based Multi-TRP PDSCH]

When a higher layer parameter "enableTwoDefaultTCI-States" is configured, the UE determines to apply the TCI state of the lowest TCI codepoint out of the TCI codepoints with which two different TCI states for the PDSCH are associated to the PDSCH.

### [Single-TRP PDSCH Scheduled by SFN PDCCH]

When a higher layer parameter "sfnSchemePdsch" is not configured, "sfnSchemePdcch" is set to "sfnSchemeA", and two TCI states are indicated for the CORESET having the lowest CORESET ID in the latest monitoring slot, the UE determines to apply a first TCI state indicated to the CORESET to the PDSCH. Here, the CORESET is a CORESET having the lowest CORESET ID in the latest monitoring slot of the active BWP in the CC.

### [Cross-Carrier Scheduling PDSCH]

When a higher layer parameter "enableDefaultBeamForCCS" is configured, the UE determines to apply the TCI state having the lowest TCI state ID for the PDSCH in the active BWP in a scheduled CC to the PDSCH.

In Rel. 17, when an offset (scheduling offset) between reception of DL DCI and the PDSCH corresponding thereto is smaller than a specific threshold (for example, timeDurationForQCL) and the common TCI state (a parameter (DLorJointTCIState/UL-TCIState)) for configuration of the common TCI state) is configured (this may be hereinafter referred to as case B), the UE determines the TCI state (QCL) to be applied to the PDSCH according to a given rule.

The following description may be applied to case B above.

### [SRP PDSCH]

When the indicated TCI state is associated with a physical cell ID (Physical Cell Identifier/Identity (PCI)) different from the PCI of the serving cell, the UE determines to apply the TCI state corresponding to the lowest CORESET ID in the latest monitoring slot of the active BWP in the CC to the PDSCH.

In this case, when property of QCL type D for the CORESET in the slot for a plurality of CCs in a band is different, QCL (QCL type D, in particular) assumption of the CORESET in the lowest CC ID may be applied to the PDSCH in a plurality of (all of) CCs in the band.

When the indicated TCI state is associated with the PCI of the serving cell, the UE determines to apply the indicated TCI state to the PDSCH.

Note that studies have not been carried out on application of the TCI state to the PDSCH other than the single-TRP PDSCH in case **B.**

In Rel. 17, when an offset (scheduling offset/triggering offset) between reception of DL DCI and an aperiodic (A-)CSI-RS corresponding thereto is smaller than a specific threshold (for example, beamSwitchTiming) and the common TCI state (a parameter (DLorJointTCIState/UL-TCIState) for configuration of the common TCI state) is not configured (this may be hereinafter referred to as case C), the UE determines the TCI state (QCL) to be applied to the A-CSI-RS according to a given rule.

The following description may be applied to case C above.

### [Single-TRP A-CSI-RS]

When any DL signal is present in the same symbol as the A-CSI-RS, the UE determines to apply QCL assumption of the DL signal to the A-CSI-RS. Otherwise (else), the UE determines to apply the TCI state associated with the lowest CORESET ID in the latest monitoring slot of the active BWP in the CC to the A-CSI-RS.

### [Multi-DCI Based Multi-TRP PDSCH]

When the higher layer parameter "enableDefaultTCI-StatePerCoresetPoolIndex" is configured and any DL signal is present in the same symbol as the A-CSI-RS, the UE determines to apply QCL assumption of the DL signal to the A-CSI-RS. Otherwise (else), the UE determines to apply the TCI state associated with the lowest CORESET ID having the same CORESET pool index value in the latest monitoring slot of the active BWP in the CC to the A-CSI-RS.

### [Single-DCI Based Multi-TRP PDSCH]

When the higher layer parameter "enableTwoDefaultTCI-States" is configured and any DL signal is present in the same symbol as the A-CSI-RS, the UE determines to apply QCL assumption of the DL signal to the A-CSI-RS. In this case, when the DL signal has two TCI states, the UE applies the first TCI state thereof to the A-CSI-RS.

Otherwise (else), the UE determines to apply the TCI state of the lowest TCI codepoint out of the TCI codepoints with which two different TCI states for the PDSCH are associated to the A-CSI-RS.

### [Single-TRP A-CSI-RS Triggered by SFN PDCCH]

When the higher layer parameter "sfnSchemePdcch" is set to "sfnSchemeA", the higher layer parameter "enableTwoDefaultTCI-States" is not configured, two TCI states are activated for the CORESET, and any DL signal is present in the same symbol as the A-CSI-RS, the UE determines to apply QCL assumption of the DL signal to the A-CSI-RS. Otherwise (else), the UE determines that the first TCI state indicated for the CORESET as the TCI state (QCL) of the PDSCH. Here, the CORESET is a CORESET having the lowest CORESET ID in the latest monitoring slot of the active BWP in the CC.

### [Cross-Carrier Scheduling A-CSI-RS]

When the higher layer parameter "enableDefaultBeamForCCS" is configured, the UE determines to apply the TCI state having the lowest TCI state ID for the PDSCH in the active BWP in a scheduled CC to the A-CSI-RS.

In Rel. 17, when an offset (scheduling offset/triggering offset) between reception of DL DCI and an A-CSI-RS corresponding thereto is smaller than a specific threshold (for example, beamSwitchTiming) and the common TCI state (a parameter (DLorJointTCIState/UL-TCIState) for configuration of the common TCI state) is configured (this may be hereinafter referred to as case D), the UE determines the TCI state (QCL) to be applied to the A-CSI-RS according to a given rule.

The following description may be applied to case D above.

### [SRP A-CSI-RS]

When the indicated TCI state is associated with the PCI different from the PCI of the serving cell, the UE determines to apply the TCI state corresponding to the lowest CORESET ID in the latest monitoring slot of the active BWP in the CC to the A-CSI-RS.

In this case, when property of QCL type D for the CORESET in the slot for a plurality of CCs in a band is different, QCL (QCL type D, in particular) assumption of the CORESET in the lowest CC ID may be applied to the A-CSI-RS in a plurality of (all of) CCs in the band.

When the indicated TCI state is associated with the PCI of the serving cell, the UE determines to apply the indicated TCI state to the A-CSI-RS.

Note that studies have not been carried out on application of the TCI state to the A-CSI-RS other than the single-TRP A-CSI-RS in case D.

### (Analysis)

As described above, sufficient studies have not been carried out on a method of determining/applying the TCI state/QCL in a specific condition when the common TCI state is configured.

In existing specifications (Rel. 17 or earlier versions), the UE cannot assume different default QCLs for buffering the DL signal in different BWPs/CCs. Sufficient studies have not been either carried out on operation of QCL assumption in the UE in such a case.

In the HST-SFN scheme in Rel. 17, sufficient studies have not been carried out on operation of the UE when the DL signal in the same symbol as the symbol of the A-CSI-RS is a PDSCH having two TCI states.

Unless these studies are sufficiently carried out, this may lead to reduction in communication quality, reduction in throughput, and the like.

In view of this, the inventors of the present invention came up with the idea of a method of appropriately configuring/indicating/applying the TCI state in transmission and reception of a signal/channel using a multi-TRP.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C".

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a joint TCI state, a separate DL/UL TCI state, a unified TCI state, a common TCI state, quasi-co-location (QCL), QCL assumption, and the like may be interchangeably interpreted. In the present disclosure, the separate DL/UL TCI state may be interpreted as a DL/UL TCI state.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of pieces of spatial relation information", and the like. The TCI state and the TCI may be interchangeably interpreted.

A panel Identifier (ID) and a panel may be interchangeably interpreted. In other words, a TRP ID and a TRP, a CORESET group ID and a CORESET group, and the like may be interchangeably interpreted.

In the present disclosure, a TRP, a transmission point, a panel, a DMRS port group, a CORESET pool, and one of two TCI states associated with one codepoint of a TCI field may be interchangeably interpreted.

In the present disclosure, a single TRP, a single TRP system, single TRP transmission, and a single PDSCH may be interchangeably interpreted. In the present disclosure, a multi-TRP (a plurality of TRPs), a multi-TRP system, multi-TRP transmission, and a multi-PDSCH may be interchangeably interpreted.

In the present disclosure, a single DCI, a single PDCCH, a single-DCI based multi-TRP, two TCI states on at least one TCI codepoint being activated, at least one codepoint of a TCI field being mapped to two TCI states, and a specific index (for example, a TRP index, a CORESET pool index, or an index corresponding to the TRP) being configured for a specific channel/CORESET may be interchangeably interpreted.

In the present disclosure, a single TRP, a channel using a single TRP, a channel using one TCI state/spatial relation, a multi-TRP not being enabled by RRC/DCI, a plurality of TCI states/spatial relations not being enabled by RRC/DCI, and no CORESET pool index (CORESETPoolIndex) value being configured for any of the CORESETs and no codepoint of a TCI field being mapped to two TCI states may be interchangeably interpreted.

In the present disclosure, a multi-TRP, a channel using a multi-TRP, a channel using a plurality of TCI states / spatial relations, a multi-TRP being enabled by RRC/DCI, a plurality of TCI states / spatial relations being enabled by RRC/DCI, and at least one of a single-DCI based multi-TRP and a multi-DCI based multi-TRP may be interchangeably interpreted.

In the present disclosure, a multi-DCI based multi-TRP, one CORESET pool index (CORESETPoolIndex) value being configured for a CORESET, and a plurality of specific indices (for example, TRP indices, CORESET pool indices, or indices corresponding to TRPs) being configured for a specific channel/CORESET may be interchangeably interpreted.

In the present disclosure, TRP #1 (first TRP) may correspond to CORESET pool index = 0, or may correspond to the first TCI state of two TCI states corresponding to one codepoint of the TCI field. TRP #2 (second TRP) TRP #1 (first TRP) may correspond to CORESET pool index = 1, or may correspond to the second TCI state of the two TCI states corresponding to one codepoint of the TCI field.

In the present disclosure, single DCI (sDCI), a single PDCCH, a multi-TRP system based on single DCI, an sDCI-based MTRP, and two TCI states in at least one TCI codepoint being activated may be interchangeably interpreted.

In the present disclosure, multi-DCI (mDCI), a multi-PDCCH, a multi-TRP system based on multi-DCI, an mDCI-based MTRP, and two CORESET pool indices or CORESET pool index = 1 (or a value equal to one or greater) being configured may be interchangeably interpreted.

QCL in the present disclosure may be interchangeably interpreted as QCL type D.

In the present disclosure, "TCI state A is of the same QCL type D as that of TCI state B," "TCI state A and TCI state B are the same," "TCI state A is QCL type D with TCI state B," and the like may be interchangeably interpreted.

In the present disclosure, a codepoint of a DCI field "Transmission Configuration Indication', a TCI codepoint, a DCI codepoint, and a codepoint of a TCI field may be interchangeably interpreted.

In the present disclosure, a single TRP and an SFN may be interchangeably interpreted. In the present disclosure, an HST, an HST scheme, a scheme for high-speed movement, scheme A, scheme B, scheme 1, scheme 2, a NW pre-compensation scheme, HST scheme 1, HST scheme 2, and an HST NW pre-compensation scheme may be interchangeably interpreted.

In the present disclosure, a PDSCH/PDCCH using a single TRP may be interpreted as a PDSCH/PDCCH based on a single TRP and a single-TRP PDSCH/PDCCH. In the present disclosure, a PDSCH/PDCCH using an SFN may be interpreted as a PDSCH/PDCCH using an SFN in multi, a PDSCH/PDCCH based on an SFN, and an SFN PDSCH/PDCCH.

In the present disclosure, reception of a DL signal (PDSCH/PDCCH) using an SFN may mean use of the same time/frequency resources and/or reception of the same data (PDSCH)/control information (PDCCH) from a plurality of transmission/reception points. Reception of a DL signal using an SFN may mean use of the same time/frequency resource and/or reception of the same data/control information using a plurality of TCI states/spatial domain filters/beams/QCLs.

In the present disclosure, an HST-SFN scheme, an SFN scheme of Rel. 17 or later versions, a new SFN scheme, a new HST-SFN scheme, an HST-SFN scenario of Rel. 17 or later versions, an HST-SFN scheme of an HST-SFN scenario, an SFN scheme for an HST-SFN scenario, scheme 1, scheme A, HST-SFN scheme A/B, HST-SFN type A/B, a Doppler pre-compensation scheme, and at least one of scheme 1 (HST scheme 1) and a Doppler pre-compensation scheme may be interchangeably interpreted.

In the present disclosure, a Doppler pre-compensation scheme, a base station pre-compensation scheme, a TRP pre-compensation scheme, a pre-Doppler compensation scheme, a Doppler pre-compensation scheme, a NW pre-compensation scheme, an HST NW pre-compensation scheme, a TRP pre-compensation scheme, a TRP-based pre-compensation scheme, HST-SFN scheme A/B, and HST-SFN type A/B may be interchangeably interpreted. In the present disclosure, a pre-compensation scheme, a reduction scheme, an improvement scheme, and a correction scheme may be interchangeably interpreted.

In the present disclosure, PDCCHs/search spaces (SSs)/CORESETs having a linkage, linked PDCCHs/SSs/CORESETs, and a pair of PDCCHs/SSs/CORESETs may be interchangeably interpreted. In the present disclosure, PDCCHs/SSs/CORESETs not having a linkage, unlinked PDCCHs/SSs/CORESETs, and individual PDCCHs/SSs/CORESETs may be interchangeably interpreted.

In the present disclosure, two linked CORESETs for PDCCH repetition and two CORESETs respectively associated with two linked SS sets may be interchangeably interpreted.

In the present disclosure, SFN-PDCCH repetition, PDCCH repetition, two linked PDCCHs, and one DCI being received over the two linked search spaces (SSs)/CORESETs may be interchangeably interpreted.

In the present disclosure, PDCCH repetition, SFN-PDCCH repetition, PDCCH repetition for higher reliability, PDCCH(s) for higher reliability, PDCCH(s) for reliability, and two linked PDCCHs may be interchangeably interpreted.

In the present disclosure, a PDCCH reception method, PDCCH repetition, SFN-PDCCH repetition, an HST-SFN, and an HST-SFN scheme may be interchangeably interpreted.

In the present disclosure, a PDSCH reception method, a single-DCI based multi-TRP, and an HST-SFN scheme may be interchangeably interpreted.

In the present disclosure, single-DCI based multi-TRP repetition may be NCJT of enhanced mobile broadband (eMBB) services (low priority, priority 0), or may be repetition of URLLC services (high priority, priority 1) of ultra-reliable and low latency communications services.

In each embodiment of the present disclosure, a PDSCH for a plurality of TRPs based on single DCI may be interchangeably interpreted as a PDSCH to which TDM/FDM/SDM for a plurality of TRPs (defined in Rel. 16) is applied.

In each embodiment of the present disclosure, a PDSCH for a plurality of TRPs may be interchangeably interpreted as a PDSCH to which TDM/FDM/SDM for a plurality of TRPs based on single DCI (defined in Rel. 16) is applied.

In each embodiment of the present disclosure, a PUSCH/PUCCH/PDCCH for a plurality of TRPs based on single DCI may be interchangeably interpreted as repetition transmission (repetition) of a PUSCH/PUCCH/PDCCH for a plurality of TRPs (defined in Rel. 17 or later versions).

In each embodiment of the present disclosure, an SFN PDSCH/PDCCH may be interchangeably interpreted as an SFN PDSCH/PDCCH defined in Rel. 17 or later versions.

In each embodiment of the present disclosure, use of a plurality of TRPs based on multi-DCI being configured may mean CORESET pool index = 1 being configured. Use of a plurality of TRPs based on multi-DCI being configured may mean the CORESET pool index having two different values (for example, 0 and 1) being configured.

In each embodiment of the present disclosure, if the joint TCI state/separate TCI state in the unified TCI state framework is not applicable to each channel/signal, the default TCI state/QCL/spatial relation described above may be used to determine the TCI state/QCL/spatial relation of such each channel.

Each embodiment of the present disclosure described below may be applied to transmission and reception of any channel/signal being an application target of the unified TCI state framework defined in Rel. 17 or later versions described above.

In the present disclosure, applying the TCI state/QCL assumption to each channel/signal/resource may mean applying the TCI state/QCL assumption to transmission and reception of each channel/signal/resource.

In the present disclosure, small, less, short, and low may be interchangeably interpreted. In the present disclosure, ignore, drop, cancel, interrupt, and postpone may be interchangeably interpreted.

In the present disclosure, repetition, repetition transmission, and repetition reception may be interchangeably interpreted.

In the present disclosure, a channel, a signal, and a channel/signal may be interchangeably interpreted. In the present disclosure, a DL channel, a DL signal, a DL signal/channel, transmission/reception of a DL signal/channel, DL reception, and DL transmission may be interchangeably interpreted. In the present disclosure, a UL channel, a UL signal, a UL signal/channel, transmission/reception of a UL signal/channel, UL reception, and UL transmission may be interchangeably interpreted.

In the present disclosure, the first TCI state may correspond to the first TRP. In the present disclosure, the second TCI state may correspond to the second TRP. In the present disclosure, the n-th TCI state may correspond to the n-th TRP.

In the present disclosure, a first CORESET pool index value (for example, 0), a first TRP index value (for example, 1), and the first TCI state (first DL/UL (joint/separate) TCI state) may correspond to each other. In the present disclosure, a second CORESET pool index value (for example, 1), a second TRP index value (for example, 2), and the second TCI state (second DL/UL (joint/separate) TCI state) may correspond to each other.

Note that, although each embodiment of the present disclosure described below will mainly describe a method involving two TRPs (that is, at least one of N and M is 2) regarding application of a plurality of TCI states in transmission and reception using a plurality of TRPs, the number of TRPs may be 3 or greater (a plurality of TRPs), and each embodiment may be applied to be compatible with the number of TRPs. In other words, at least one of N and M may be a number greater than 2.

### (Radio Communication Method)

### <Zeroth Embodiment>

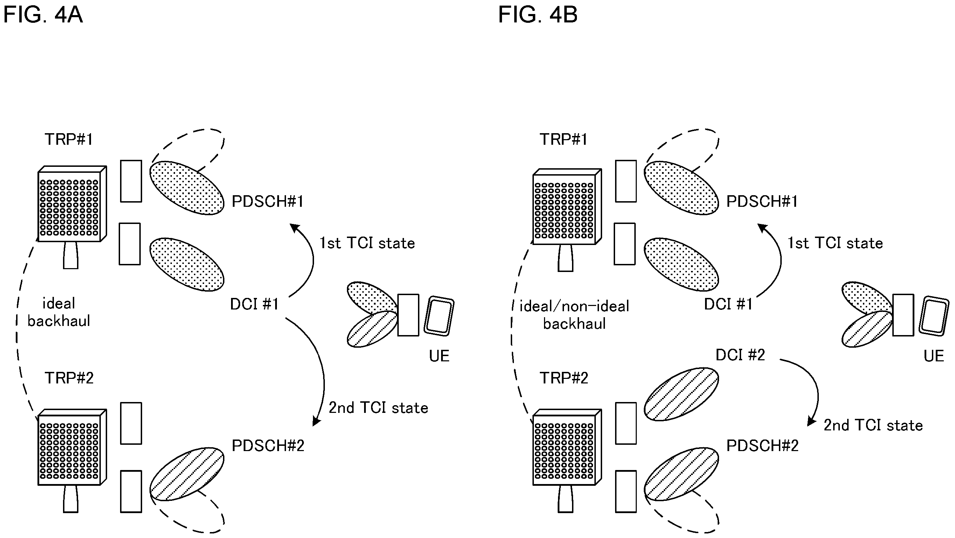

It may be assumed that the single-DCI based multi-TRP is supported when the multi-TRP uses an ideal backhaul (see FIG. 4A).

In this case, one beam indication DCI may indicate a plurality of TCI states regarding each TRP. For example, the plurality of TCI states may be up to two joint TCI states, or may be up to four separate DL/UL TCI states (two DL TCI states and two UL TCI states).

In the present disclosure, one TCI state may mean one joint (DL/UL) TCI state, or may mean at least one of one DL (separate) TCI state and one UL (separate) TCI state.

It may be assumed that the multi-PDCCH (DCI) is supported when the multi-TRPs use an ideal backhaul/non-ideal backhaul (see FIG. 4B).

In this case, one DCI associated with one TRP (CORESET pool index) may indicate the TCI state corresponding to the TRP.

Note that the ideal backhaul may be referred to as DMRS port group type 1, reference signal related group type 1, antenna port group type 1, CORESET pool type 1, or the like. The non-ideal backhaul may be referred to as DMRS port group type 2, reference signal related group type 2, antenna port group type 2, CORESET pool type 2, or the like. Terms are not limited to these.

The field (TCI field) for indicating the TCI state included in DCI may conform to at least one of the following alternatives 0-1 and 0-2.

### [Alternative 0-1]

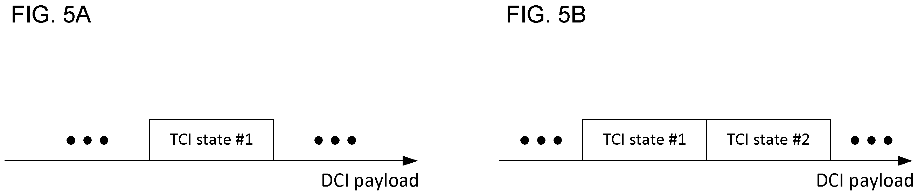

The TCI field defined prior to Rel. 15/16 may be reused (see FIG. 5A). As shown in FIG. 5A, one TCI field may be included in the DCI. The number of bits of the TCI field may be a specific number (for example, 3).

### [Alternative 0-2]

The TCI field defined prior to Rel. 15/16 may be enhanced (see FIG. 5B). For example, a plurality of (for example, two) TCI fields may be included in the DCI. The number of bits of each of the TCI fields may be a specific number (for example, 3).

In alternative 0-2, regarding the DCI without DL assignment, DCI overhead is not added. On the other hand, regarding the DCI including DL assignment, DCI overhead is added.

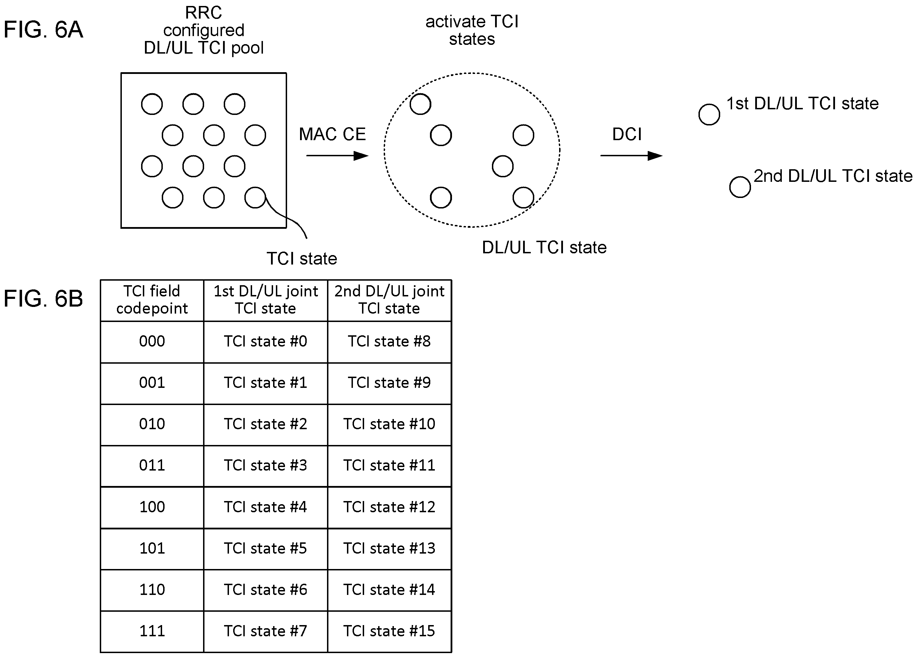

Regarding the single-DCI based multi-TRP, in a case of the joint TCI state, a DL/UL (joint) TCI state may be activated for the UE, using a MAC CE. Subsequently, the UE may be indicated with a first DL/UL (joint) TCI state and a second DL/UL (joint) TCI state, using DCI (beam indication) (see FIG. 6A).

The TCI codepoint indicated by the beam indication may correspond to one or a plurality of (two) TCI states (first joint TCI state/second joint TCI state) (see FIG. 6B).

Although the example shown in FIG. 6B shows an example in which all of the TCI codepoints corresponding to the active TCI state correspond to two TCI states, an association may be used in which at least one of the TCI codepoints corresponding to the active TCI state corresponds to two TCI states. By using such an association, the single TRP and the multi-TRP can be dynamically switched.

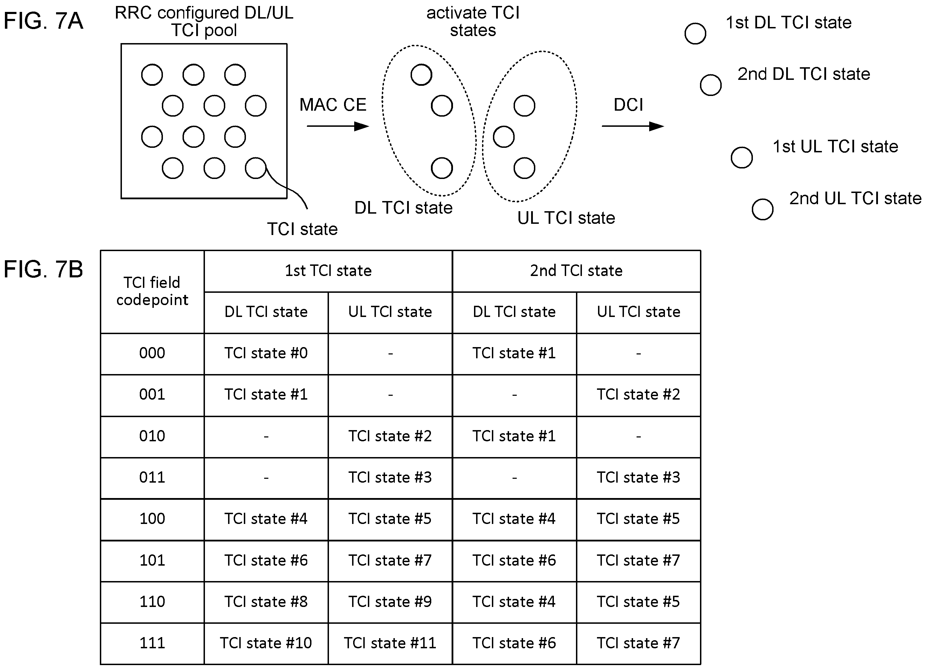

Regarding the single-DCI based multi-TRP, in a case of the separate TCI state, a DL (separate) TCI state and a UL (separate) TCI state may be activated for the UE, using a MAC CE. Subsequently, the UE may be indicated with a first DL (separate) TCI state and a first UL (separate) TCI state and a second DL (separate) TCI state and a second UL (separate) TCI state, using DCI (beam indication) (see FIG. 7A).

The TCI codepoint indicated by the beam indication may correspond to one or a plurality of (two) TCI states (first separate (DL/UL) TCI state/second separate (DL/UL) TCI state) (see FIG. 7B).

Although the example shown in FIG. 7B shows an example in which all of the TCI codepoints corresponding to the active TCI state correspond to two TCI states (first separate (DL/UL) TCI state/second separate (DL/UL) TCI state), an association may be used in which at least one of the TCI codepoints corresponding to the active TCI state corresponds to two TCI states. By using such an association, the single TRP and the multi-TRP can be dynamically switched.

Note that, regarding the TCI states to be activated by a MAC CE, although FIG. 7A shows an example in which separate TCI states are activated with the DL TCI state and the UL TCI state, the DL TCI state and the UL TCI state to be activated may include a common TCI state even in a case of the separate TCI state.

Regarding the multi-DCI based multi-TRP, at least one of configuration of the TCI state using RRC, activation thereof using a MAC CE, and indication thereof using DCI may be performed for each CORESET pool index.

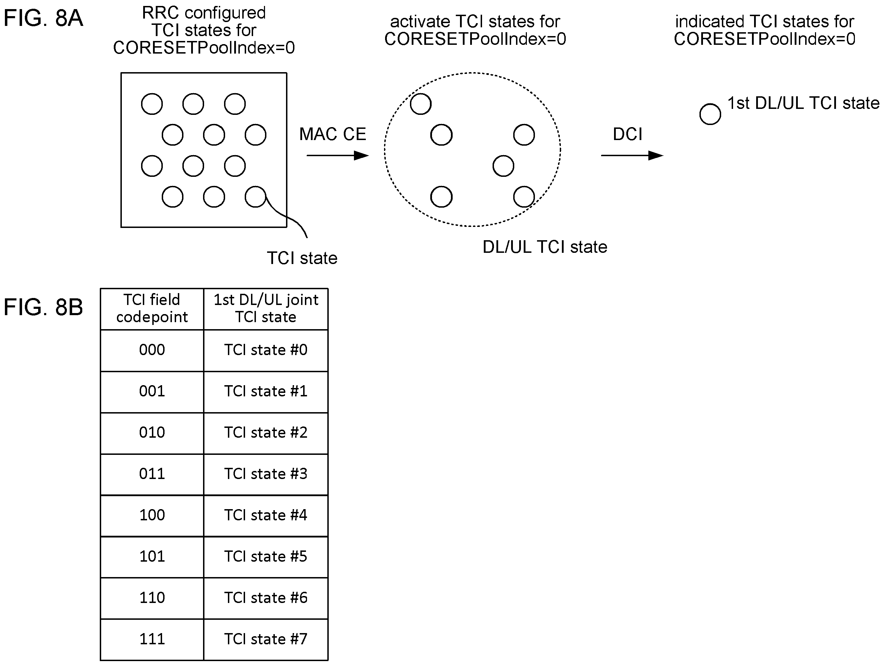

Regarding the multi-DCI based multi-TRP, in a case of the joint TCI state, configuration of the TCI state using RRC, activation thereof using a MAC CE, and indication thereof using DCI may be performed for the UE for the CORESET pool index having a first value (for example, 0) (see FIG. 8A). The indicated TCI state corresponding to the CORESET pool index having the first value may be referred to as the first TCI state.

The TCI codepoint indicated by the beam indication may correspond to one TCI state (first joint TCI state) (see FIG. 8B).

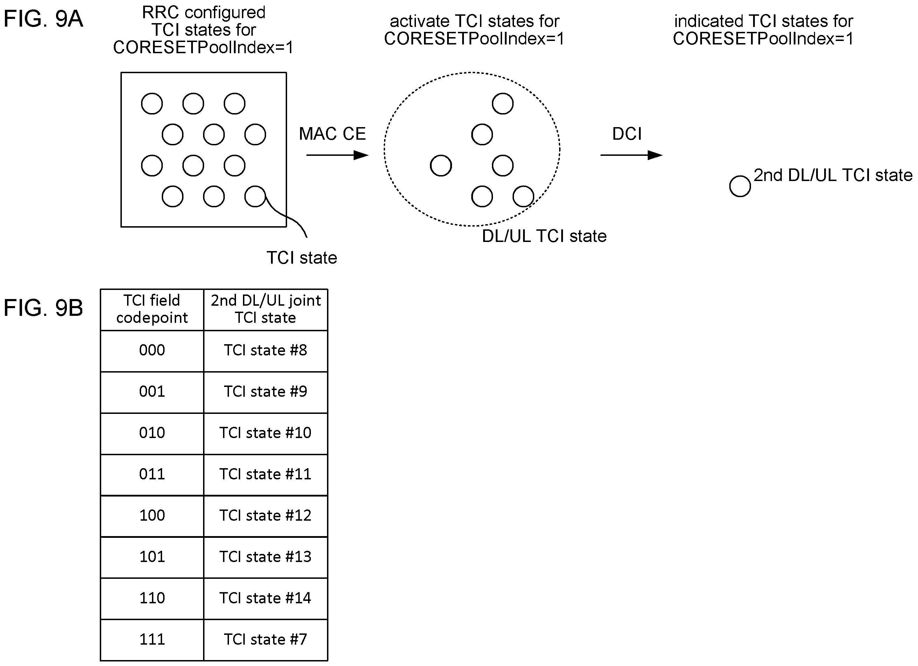

Regarding the multi-DCI based multi-TRP, in a case of the joint TCI state, configuration of the TCI state using RRC, activation thereof using a MAC CE, and indication thereof using DCI may be performed for the UE for the CORESET pool index having a second value (for example, 1) (see FIG. 9A). The indicated TCI state corresponding to the CORESET pool index having the second value may be referred to as the second TCI state.

The TCI codepoint indicated by the beam indication may correspond to one TCI state (second joint TCI state) (see FIG. 9B).

When the DCI corresponding to each CORESET pool index indicates the same TCI state (TCI state ID) (for example, when TCI state #7 corresponding to TCI codepoint "111" in FIG. 8B and FIG. 9B is indicated), the UE may determine that one TCI state is indicated. In this case, the UE may perform operation using the single TRP.

Note that, regarding the multi-DCI based multi-TRP, an example using the joint TCI state is described; however, application is also possible for a case using the separate TCI state as appropriate.

In the present disclosure, an indicated TCI state, a Rel-17 TCI state, a common TCI state, and a unified TCI state may be interchangeably interpreted. In the present disclosure, a common TCI state applied to a channel/signal using a multi-TRP, a Rel-17 TCI state, and a Rel-18 TCI state may be interchangeably interpreted.

The UE may apply the indicated TCI state to a specific channel/signal.

The specific channel/signal may be a UE-specific (dedicated) DL channel/signal. The UE-specific DL channel/signal may be a UE-specific PDCCH/PDSCH/CSI-RS (for example, an aperiodic (A-)CSI-RS).

The specific channel/signal may be a specific UL channel/signal. The specific UL channel/signal may be at least one of a PUSCH indicated by DCI (indicated by a dynamic grant), a configured grant PUSCH, a plurality of (all of) specific PUCCHs (resources), and an SRS (for example, an aperiodic (A-)SRS).

One or a plurality of (for example, two) indicated TCI states may be indicated based on the method described in the zeroth embodiment described above.

Note that each embodiment of the present disclosure will describe an example in which the number of TCI states indicated to the UE is one or two; however, the number of indicated TCI states is not limited to this. For example, the number of TCI states indicated to the UE may be a number of 3 or greater (for example, 4).

Each embodiment of the present disclosure described below may be applied to the single-TRP PDSCH.

The single-TRP PDSCH may be scheduled by specific DCI (DCI format). The specific DCI format may be DCI format 1_0 (or a DCI format not including the TCI field), for example. The specific DCI format may be DCI format 1_1/1-2. The specific DCI format may indicate one TCI state.

The QCL assumption of the single-TRP PDSCH may be the default TCI state. The default TCI state may be one TCI state (in any DCI format).

Repetition transmission of the multi-TRP need not be configured for the UE. In this case, the single-TRP PDSCH may be scheduled as a PDSCH with single layer MIMO.

The single-TRP PDSCH may be a PDSCH when the multi-TRP (for example, the CORESET pool index) is not configured for the UE.

The single-TRP PDSCH may be a PDSCH scheduled with the CORESET of at least the CSS. The single-TRP PDSCH may be a PDSCH scheduled with the CORESET of only the CSS (or the CSS except the type-3 CSS).

Each embodiment of the present disclosure described below may be applied to the multi-TRP PDSCH.

The single-TRP PDSCH may be scheduled by specific DCI (DCI format). The specific DCI format may be DCI format 1_1/1-2. The specific DCI format may indicate two TCI states.

The QCL assumption of the multi-TRP PDSCH may be the default TCI state. The default TCI state may be two TCI states (in any DCI format).

Repetition transmission of the multi-TRP need not be configured for the UE. In this case, the multi-TRP PDSCH may be scheduled as a PDSCH with multi-layer MIMO.

The multi-TRP PDSCH may be a PDSCH when repetition transmission of the multi-TRP is configured for the UE. In this case, the multi-TRP PDSCH may be scheduled as a PDSCH of repetition transmission (with repetition) (using TDM/FDM/SDM).

The multi-TRP PDSCH may be a PDSCH when SFN scheme A/B is configured for the UE. The multi-TRP PDSCH may be a PDSCH having a plurality of TCI states.

Each embodiment of the present disclosure described below may be applied to the single-TRP PDCCH.

The single-TRP PDCCH may be a PDCCH associated with the CORESET not configured with SFN scheme A/B.

The single-TRP PDCCH may be a PDCCH associated with the CORESET not configured with repetition transmission (of two linked SSs) .

Each embodiment of the present disclosure described below may be applied to the multi-TRP PDCCH.

The multi-TRP PDCCH may be a PDCCH associated with the CORESET configured with SFN scheme A/B.

Each embodiment of the present disclosure described below may be applied to the single-TRP PUSCH/PUCCH.

The single-TRP PUSCH/PUCCH may be a PUSCH/PUCCH not configured with repetition transmission of the multi-TRP.

Each embodiment of the present disclosure described below may be applied to the multi-TRP PUSCH/PUCCH.

The multi-TRP PUSCH/PUCCH may be a PUSCH/PUCCH configured with repetition transmission of the multi-TRP.

Each embodiment of the present disclosure described below may be applied to the single/multi-TRP CSI-RS/SRS.

Each embodiment of the present disclosure described below may be applied when the common TCI state is configured for at least one of a single-DCI based NCJT PDSCH, a multi-DCI based NCJT PDSCH, repetition transmission of a single-DCI based SDM/TDM/FDM PDSCH, repetition transmission of a PDCCH/PUCCH/PUSCH using a plurality of TRPs, operation related to the multi-TRP in the inter-cell, beam management for the multi-TRP, and an HST/SFN scheme.

Enhancement of the common TCI state may be used for beam indication in carrier aggregation in the inter-cell (inter-band). In beam indication in carrier aggregation in the inter-cell (inter-band), one or more TCI states of a plurality of different bands may be indicated using one MAC CE/DCI.

For the UE, one or a plurality of (for example, two) TCI states may be indicated by beam indication DCI. In the present disclosure, the TCI state(s) may be referred to as "indicated TCI state(s)".

For the UE, a list of TCI states may be configured. The list may include a plurality of TCI states. As described above, the list of TCI states may be configured using RRC signaling. The TCI state(s) may be referred to as "configured TCI state(s)".

The UE may be configured with the list of TCI states, and one or a plurality of TCI states may be activated from the list. As described above, the TCI state(s) may be activated using a MAC CE. The TCI state(s) may also be referred to as "configured TCI state(s)".

The UE may apply at least one of the "configured TCI state(s)" to each channel/signal. In this case, the UE may apply one or a plurality of (for example, two) TCI states out of the "configured TCI state(s)", based on the TCI field included in scheduling/triggering DCI ("other DCI", in particular) of the channel/signal.

In the present disclosure, "first" may be interpreted as "second" or "n-th (n is an integer of 3 or greater)".

In the present disclosure, regarding a case in which the UE selects/determines the first TCI state (indicated TCI state) or the second TCI state (indicated TCI state), the UE may be configured with which TCI state to select/determine, using higher layer signaling (RRC/MAC CE).

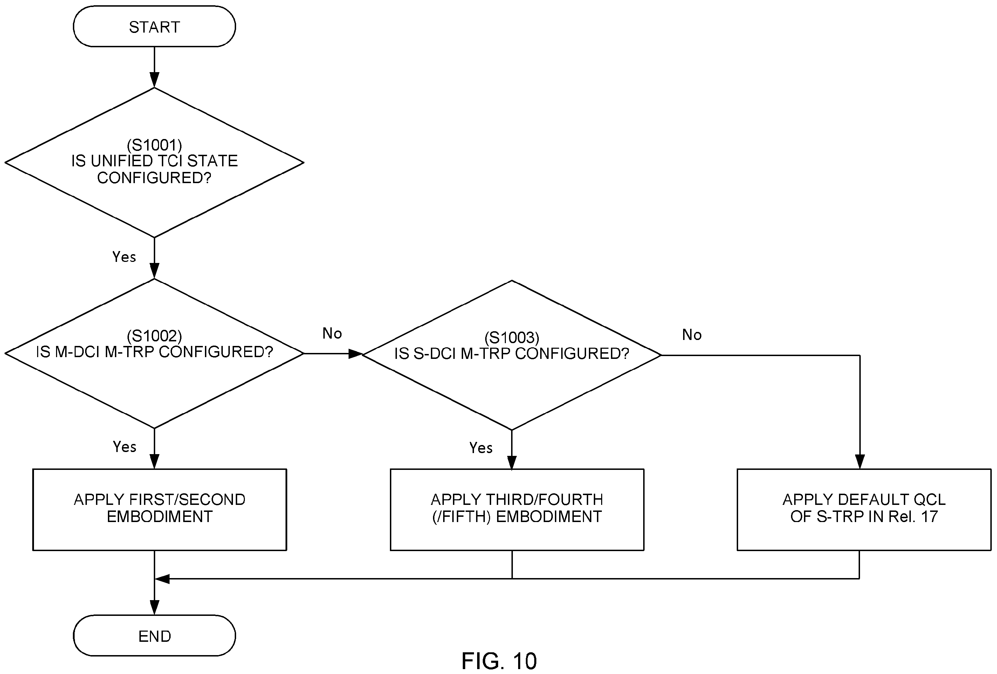

With reference to FIG. 10, the following will describe an overview of UE operation according to first to fifth embodiments described below.

First, whether or not the common TCI state is configured may be determined (Step S1001).

In Step S1001, when it is determined that the common TCI state is configured, subsequently, whether or not transmission using the multi-DCI multi-TRP is configured may be determined (Step 1002).

In Step S1002, when it is determined that transmission using the multi-DCI multi-TRP is configured, application of the first/second embodiment may be determined.

Note that, in Step 1002, whether or not an RRC parameter (an enabler, for example, enableDefaultTCI-StatePerCoresetPoolIndex, or a parameter to be newly defined in Rel. 18) for enabling the default TCI state/QCL for the multi-DCI multi-TRP is configured may be determined.

In Step S1002, when it is determined that transmission using the multi-DCI multi-TRP is not configured, subsequently, whether or not transmission using the single-DCI multi-TRP is configured may be determined (Step S1003).

In Step S1003, when it is determined that transmission using the single-DCI multi-TRP is configured, application of the third/fourth (/fifth) embodiment may be determined.

In Step S1003, when it is determined that transmission using the single-DCI multi-TRP is not configured, operation related to the default QCL in Rel. 17 described above may be applied.

Note that, in Step 1003, whether or not an RRC parameter (an enabler, for example, enableTwoDefaultTCI-States, or a parameter to be newly defined in Rel. 18) for enabling the default TCI state/QCL for the single-DCI multi-TRP is configured may be determined.

Note that the order from Steps S1001 to S1003 described above is merely an example. The order from Steps S1001 to S1003 described above may be any order, and each step may be determined independently.

### <First Embodiment>

The first embodiment relates to the TCI state/QCL of a channel in the multi-DCI based multi-TRP.

For the UE, the unified TCI state may be configured. For example, the UE may be configured with an RRC parameter related to configuration of the unified TCI state.

For example, the RRC parameter related to configuration of the unified TCI state may be at least one of a configuration parameter (for example, DLorJointTCIState) for the DL or the joint TCI state and a configuration parameter (UL-TCIState) for the UL TCI state.

The configuration parameter (for example, DLorJointTCIState) for the DL or the joint TCI state may indicate the DL (separate) TCI state/joint TCI state. The configuration parameter (for example, UL-TCIState) for the UL TCI state may indicate the UL TCI state.

In the following, in each embodiment of the present disclosure, the unified TCI state being configured, the (separate) DL/UL/joint TCI state being configured, and the RRC parameter (for example, DLorJointTCIState/UL-TCIState) related to configuration of the unified TCI state being configured may be interchangeably interpreted.

For the UE, transmission and reception of a channel/signal using the multi-DCI multi-TRP may be configured.

In the following, in the present embodiment, application may be carried out when the scheduling offset is smaller than a specific threshold (for example, timeDurationForQCL/beamSwitchTiming/specific parameter). The specific threshold may be determined based on UE capability information reported by the UE.

Note that, in the present disclosure, as the specific threshold, timeDurationForQCL/beamSwitchTiming may be used, or a specific parameter (defined in Rel. 18 or later versions) may be used.

The UE may determine the TCI state/QCL of a specific DL channel/signal, based on a specific method. The specific DL channel/signal may be a PDSCH, for example.

The specific method may be a method based on the TCI state or the QCL assumption corresponding to a specific COREST pool index. For example, the specific method may be a method described in at least one of the following Embodiments 1-1 to 1-3.

### <<Embodiment 1-1>>

The UE may apply the QCL assumption/TCI state corresponding to a specific CORESET ID to a specific DL channel/signal (for example, a PDSCH).

The specific CORESET ID may be a given (for example, the lowest) CORESET ID having the same CORESET pool index (as the CORESET for scheduling the PDSCH) in the latest monitoring slot.

The latest monitoring slot may be a monitoring slot in the active BWP in one CC.

When QCL property (for example, QCL type D) for the CORESET in one slot for a plurality of CCs in a band is different, the CORESET having the specific CORESET ID may be a CORESET in the active BWP in a CC having the lowest CC ID.

In this case, the UE may determine a total of n QCL assumptions for n (for example, n = 2) CORESET pool indices.

When the "indicated TCI state(s)"/"configured TCI state(s)" are applied to the CORESET, the "indicated TCI state(s)"/"configured TCI state(s)" may be applied to a specific DL channel/signal (for example, a PDSCH).

When a plurality of (two) TCI states correspond to one CORESET, the UE may determine to apply any one TCI state of the plurality of TCI states to a specific DL channel/signal (for example, a PDSCH).

### <<Embodiment 1-2>>

The UE may apply the "indicated TCI state (joint TCI state/DL (separate) TCI state)" for the CORESET pool index having the first value (for example, 0) and the "indicated TCI state (joint TCI state/DL (separate) TCI state)" for the CORESET pool index having the second value (for example, 1) to a specific DL channel/signal (for example, a PDSCH).

In this case, the UE may determine a total of n QCL assumptions for n (for example, n = 2) CORESET pool indices.

When QCL property (for example, QCL type D) for the CORESET in one slot for a plurality of CCs in a band is different, the CORESET to be determined/selected may be a CORESET in the active BWP in a CC having the lowest CC ID.

In the multi-DCI based multi-TRP, two TCI states may be indicated by one beam indication DCI. In this case, regarding each of the PDSCHs, the UE may apply the first indicated TCI state and the second indicated TCI state indicated by respective DCIs.

For example, when TCI state #1 and TCI state #2 are indicated by DCI #1 and TCI state #3 and TCI state #4 are indicated by DCI #2, the UE may apply TCI state #1 and TCI state #2 to PDSCH #1 associated with DCI #1 and apply TCI state #3 and TCI state #4 to PDSCH #2 associated with DCI #2.

### <<Embodiment 1-3>>

One of Embodiments 1-1 and 1-2 described above may be selected/applied based on a specific condition.

The specific condition may be a condition based on the PCI associated with the "indicated TCI state(s)", for example.

For example, when one or all of (both of) the "indicated TCI states (joint TCI states/DL (separate) TCI states)" are associated with the PCI of the serving cell (that is, in a case of the intra-cell), the UE may determine to apply Embodiment 1-2 described above.

For example, when one or all of (both of) the "indicated TCI states (joint TCI states/DL (separate) TCI states)" are associated with the PCI different from the PCI of the serving cell (that is, in a case of the inter-cell), the UE may determine to apply Embodiment 1-1 described above.

In a case of the intra-cell, it is effective to invariably use two "indicated TCI states" for the PDSCH. On the other hand, when the "indicated TCI state(s)" are associated with the PCI different from the PCI of the serving cell (that is, in a case of the inter-cell), there is a problem in that the UE cannot receive a non-UE dedicated PDSCH. The present embodiment is effective for solving the problem.

The UE may be permitted to receive at least one of the PDSCH from one or all of (both of) the serving cells and the PDSCH from a non-serving cell at the same time (time domain (for example, slot/symbol)).

When Embodiment 1-2 is applied in the inter-cell, the UE may switch to operation for the intra-cell. The base station may indicate the switching to the UE. The indication may be performed using RRC/MAC CE/DCI.

At least one of Embodiments 1-1 to 1-3 described above may be applied (only) when a specific RRC parameter is configured for the UE. Otherwise, the UE may apply the method described in the default QCL in Rel. 17 described above.

For example, the specific RRC parameter/configuration may be a parameter (for example, "enableDefaultTCI-StatePerCoresetPoolIndex") for enabling the default TCI state of each CORESET pool index, or a specific parameter defined in Rel. 18 or later versions.

According to this, the UE need not assume a plurality of default QCLs for buffering a DL channel/signal, and can thus simplify processing of the UE.

According to the first embodiment described above, the TCI state/QCL assumption can be appropriately applied to a DL channel/signal (for example, a PDSCH) using the multi-DCI multi-TRP.

### <Second Embodiment>

The second embodiment relates to the TCI state/QCL of a channel in the multi-DCI based multi-TRP.

For the UE, the unified TCI state may be configured. For example, the UE may be configured with an RRC parameter related to configuration of the unified TCI state.

For example, the RRC parameter related to configuration of the unified TCI state may be at least one of a configuration parameter (for example, DLorJointTCIState) for the DL or the joint TCI state and a configuration parameter (UL-TCIState) for the UL TCI state.

The configuration parameter (for example, DLorJointTCIState) for the DL or the joint TCI state may indicate the DL (separate) TCI state/joint TCI state. The configuration parameter (for example, UL-TCIState) for the UL TCI state may indicate the UL TCI state.

For the UE, transmission and reception of a channel/signal using the multi-DCI multi-TRP may be configured.

In the following, in the present embodiment, application may be carried out when the scheduling offset is smaller than a specific threshold (for example, timeDurationForQCL/beamSwitchTiming/specific parameter). The specific threshold may be determined based on UE capability information reported by the UE.

The UE may determine the TCI state/QCL of a specific DL channel/signal, based on a specific method. The specific DL channel/signal may be an A-CSI-RS, for example.

Other DL channels/signals need not be present in the same symbol as the symbol in which the specific DL channel/signal is transmitted.

The specific method may be a method based on the TCI state or the QCL assumption corresponding to a specific COREST pool index. For example, the specific method may be a method described in at least one of the following Embodiments 2-1 to 2-3.

### <<Embodiment 2-1>>

The UE may apply the QCL assumption/TCI state corresponding to a specific CORESET ID to a specific DL channel/signal (for example, an A-CSI-RS).

The specific CORESET ID may be a given (for example, the lowest) CORESET ID having the same CORESET pool index (as the CORESET for triggering the A-CSI-RS) in the latest monitoring slot.

The latest monitoring slot may be a monitoring slot in the active BWP in one CC.

When QCL property (for example, QCL type D) for the CORESET in one slot for a plurality of CCs in a band is different, the CORESET having the specific CORESET ID may be a CORESET in the active BWP in a CC having the lowest CC ID.

In this case, the UE may determine one QCL assumption for each CORESET pool index.

When the "indicated TCI state(s)"/"configured TCI state(s)" are applied to the CORESET, the "indicated TCI state(s)"/"configured TCI state(s)" may be applied to a specific DL channel/signal (for example, an A-CSI-RS).

When a plurality of (two) TCI states correspond to one CORESET, the UE may determine to apply any one TCI state (for example, a selected first TCI state) of the plurality of TCI states to a specific DL channel/signal (for example, an A-CSI-RS).

### <<Embodiment 2-2>>

The UE may apply one of the "indicated TCI state (joint TCI state/DL (separate) TCI state)" for the CORESET pool index having the first value (for example, 0) and the "indicated TCI state (joint TCI state/DL (separate) TCI state)" for the CORESET pool index having the second value (for example, 1) to a specific DL channel/signal (for example, an A-CSI-RS).

For example, the UE may apply the "indicated TCI state (joint TCI state/DL (separate) TCI state)" for the CORESET pool index having the first (or second) value (for example, 0 (or 1)) to a specific DL channel/signal (for example, an A-CSI-RS).

When QCL property (for example, QCL type D) for the CORESET in one slot for a plurality of CCs in a band is different, the CORESET to be determined/selected may be a CORESET in the active BWP in a CC having the lowest CC ID.

In the multi-DCI based multi-TRP, two TCI states may be indicated by one beam indication DCI. In this case, regarding each of the A-CSI-RSs, the UE may apply one of the first indicated TCI state and the second indicated TCI state indicated by respective DCIs.

For example, when TCI state #1 and TCI state #2 are indicated by DCI #1 and TCI state #3 and TCI state #4 are indicated by DCI #2, the UE may apply one of TCI state #1 and TCI state #2 to A-CSI-RS #1 associated with DCI #1 and apply one of TCI state #3 and TCI state #4 to A-CSI-RS #2 associated with DCI #2.

### <<Embodiment 2-3>>

One of Embodiments 2-1 and 2-2 described above may be selected/applied based on a specific condition.

The specific condition may be a condition based on the PCI associated with the "indicated TCI state(s)", for example.

For example, when one or all of (both of) the "indicated TCI states (joint TCI states/DL (separate) TCI states)" are associated with the PCI of the serving cell (that is, in a case of the intra-cell), the UE may determine to apply Embodiment 2-2 described above.

For example, when one or all of (both of) the "indicated TCI states (joint TCI states/DL (separate) TCI states)" are associated with the PCI different from the PCI of the serving cell (that is, in a case of the inter-cell), the UE may determine to apply Embodiment 2-1 described above.

Effects related to the present embodiment are similar to the effects described in Embodiment 1-3.

The UE may be permitted to receive at least one of the A-CSI-RS from one or all of (both of) the serving cells and the A-CSI-RS from a non-serving cell at the same time (time domain (for example, slot/symbol)).

When Embodiment 2-2 is applied in the inter-cell, the UE may switch to operation for the intra-cell. The base station may indicate the switching to the UE. The indication may be performed using RRC/MAC CE/DCI.

At least one of Embodiments 2-1 to 2-3 described above may be applied (only) when a specific RRC parameter is configured for the UE. Otherwise, the UE may apply the method described in the default QCL in Rel. 17 described above.

For example, the specific RRC parameter/configuration may be a parameter (for example, "enableDefaultTCI-StatePerCoresetPoolIndex") for enabling the default TCI state of each CORESET pool index, or a specific parameter defined in Rel. 18 or later versions.

According to the second embodiment described above, the TCI state/QCL assumption can be appropriately applied to a DL channel/signal (for example, an A-CSI-RS) using the multi-DCI multi-TRP.

### <Third Embodiment>

The third embodiment relates to the TCI state/QCL of a channel in the single-DCI based multi-TRP.

For the UE, the unified TCI state may be configured. For example, the UE may be configured with an RRC parameter related to configuration of the unified TCI state.

For example, the RRC parameter related to configuration of the unified TCI state may be at least one of a configuration parameter (for example, DLorJointTCIState) for the DL or the joint TCI state and a configuration parameter (UL-TCIState) for the UL TCI state.

The configuration parameter (for example, DLorJointTCIState) for the DL or the joint TCI state may indicate the DL (separate) TCI state/joint TCI state. The configuration parameter (for example, UL-TCIState) for the UL TCI state may indicate the UL TCI state.

For the UE, transmission and reception of a channel/signal using the single-DCI multi-TRP may be configured. A plurality of (for example, two) TCI states corresponding to at least one TCI codepoint may mean transmission and reception of a channel/signal using the single-DCI multi-TRP being configured.

In the following, in the present embodiment, application may be carried out when the scheduling offset is smaller than a specific threshold (for example, timeDurationForQCL/beamSwitchTiming/specific parameter). The specific threshold may be determined based on UE capability information reported by the UE.

The UE may determine the TCI state/QCL of a specific DL channel/signal, based on a specific method. The specific DL channel/signal may be a PDSCH, for example.

The specific method may be a method based on the TCI state corresponding to a specific TCI codepoint or the unified TCI state corresponding to an index related to a specific transmission/reception point (TRP). For example, the specific method may be a method described in at least one of the following Embodiments 3-1 to 3-3.

### <<Embodiment 3-1>>

The UE may apply the QCL assumption/TCI state corresponding to a specific TCI codepoint to a specific DL channel/signal (for example, a PDSCH).

The specific TCI codepoint may be a given (for example, the lowest) TCI codepoint out of the TCI codepoints corresponding to a plurality of (for example, two) different TCI states for the PDSCH (in the active BWP in a scheduled CC).

The TCI codepoint may be associated with one or a plurality of (for example, two) UL TCI states. The TCI codepoint may be associated with one or a plurality of (for example, two) UL TCI states separately from a plurality of joint/DL TCI states.

In this case, the UE may determine a total of n QCL assumptions for the index (for example, the TRP index/CORESET pool index) related to n (for example, n = 2) TRPs.

When the "indicated TCI state(s)"/"configured TCI state(s)" are applied to the CORESET, the "indicated TCI state(s)"/"configured TCI state(s)" may be applied to a specific DL channel/signal (for example, a PDSCH).

When a plurality of (two) TCI states correspond to one CORESET, the UE may determine to apply a plurality of TCI states to a specific DL channel/signal (for example, a PDSCH).

### <<Embodiment 3-2>>

The UE may apply the "indicated TCI state (joint TCI state/DL (separate) TCI state)" for the index related to the TRP having the first value (for example, 0) and the "indicated TCI state (joint TCI state/DL (separate) TCI state)" for the index related to the TRP having the second value (for example, 1) to a specific DL channel/signal (for example, a PDSCH).

In this case, the UE may determine a total of n QCL assumptions for the index related to n (for example, n = 2) TRPs.

### <<Embodiment 3-3>>

One of Embodiments 3-1 and 3-2 described above may be selected/applied based on a specific condition.

The specific condition may be a condition based on the PCI associated with the "indicated TCI state(s)", for example.

For example, when one or all of (both of) the "indicated TCI states (joint TCI states/DL (separate) TCI states)" are associated with the PCI of the serving cell (that is, in a case of the intra-cell), the UE may determine to apply Embodiment 3-2 described above.

For example, when one or all of (both of) the "indicated TCI states (joint TCI states/DL (separate) TCI states)" are associated with the PCI different from the PCI of the serving cell (that is, in a case of the inter-cell), the UE may determine to apply Embodiment 3-1 described above.

In a case of the intra-cell, it is effective to invariably use two "indicated TCI states" for the PDSCH. On the other hand, when the "indicated TCI state(s)" are associated with the PCI different from the PCI of the serving cell (that is, in a case of the inter-cell), there is a problem in that the UE cannot receive a non-UE dedicated PDSCH. The present embodiment is effective for solving the problem.

The UE may be permitted to receive at least one of the PDSCH from one or all of (both of) the serving cells and the PDSCH from a non-serving cell at the same time (time domain (for example, slot/symbol)).

When Embodiment 3-2 is applied in the inter-cell, the UE may switch to operation for the intra-cell. The base station may indicate the switching to the UE. The indication may be performed using RRC/MAC CE/DCI.

At least one of Embodiments 3-1 to 3-3 described above may be applied (only) when a specific RRC parameter is configured for the UE. Otherwise, the UE may apply the method described in the default QCL in Rel. 17 described above.

For example, the specific RRC parameter/configuration may be a parameter (for example, "enableTwoDefaultTCI-States") for enabling two default TCI states, or a specific parameter defined in Rel. 18 or later versions.

According to this, the UE need not assume a plurality of default QCLs for buffering a DL channel/signal, and can thus simplify processing of the UE.

According to the third embodiment described above, the TCI state/QCL assumption can be appropriately applied to a DL channel/signal (for example, a PDSCH) using the single-DCI multi-TRP.

### <Fourth Embodiment>

The fourth embodiment relates to the TCI state/QCL of a channel in the single-DCI based multi-TRP.

For the UE, the unified TCI state may be configured. For example, the UE may be configured with an RRC parameter related to configuration of the unified TCI state.

For example, the RRC parameter related to configuration of the unified TCI state may be at least one of a configuration parameter (for example, DLorJointTCIState) for the DL or the joint TCI state and a configuration parameter (UL-TCIState) for the UL TCI state.

The configuration parameter (for example, DLorJointTCIState) for the DL or the joint TCI state may indicate the DL (separate) TCI state/joint TCI state. The configuration parameter (for example, UL-TCIState) for the UL TCI state may indicate the UL TCI state.

For the UE, transmission and reception of a channel/signal using the single-DCI multi-TRP may be configured. A plurality of (for example, two) TCI states corresponding to at least one TCI codepoint may mean transmission and reception of a channel/signal using the single-DCI multi-TRP being configured.

In the following, in the present embodiment, application may be carried out when the scheduling offset is smaller than a specific threshold (for example, timeDurationForQCL/beamSwitchTiming/specific parameter). The specific threshold may be determined based on UE capability information reported by the UE.

The UE may determine the TCI state/QCL of a specific DL channel/signal, based on a specific method. The specific DL channel/signal may be an A-CSI-RS, for example.

The specific method may be a method based on the TCI state corresponding to a specific TCI codepoint or the unified TCI state corresponding to an index related to a specific transmission/reception point (TRP). For example, the specific method may be a method described in at least one of the following Embodiments 4-1 to 4-3.

### <<Embodiment 4-1>>

The UE may apply the QCL assumption/TCI state corresponding to a specific TCI codepoint to a specific DL channel/signal (for example, an A-CSI-RS).

The specific TCI codepoint may be a given (for example, the lowest) TCI codepoint out of the TCI codepoints corresponding to a plurality of (for example, two) different TCI states for the PDSCH (in the active BWP in a scheduled CC).

The TCI codepoint may be associated with one or a plurality of (for example, two) UL TCI states. The TCI codepoint may be associated with one or a plurality of (for example, two) UL TCI states separately from a plurality of joint/DL TCI states.

In this case, the UE may determine a total of n QCL assumptions for the index (for example, the TRP index/CORESET pool index) related to n (for example, n = 2) TRPs.

When the "indicated TCI state(s)"/"configured TCI state(s)" are applied to the CORESET, the "indicated TCI state(s)"/"configured TCI state(s)" may be applied to a specific DL channel/signal (for example, a (triggered) A-CSI-RS).

When a plurality of (two) TCI states correspond to one CORESET, the UE may determine to apply any one TCI state (for example, a selected first TCI state) of the plurality of TCI states to a specific DL channel/signal (for example, a (triggered) A-CSI-RS).

### <<Embodiment 4-2>>

The UE may apply any one of a plurality of "indicated TCI states (joint TCI states/DL (separate) TCI states)" to a specific DL channel/signal (for example, an A-CSI-RS).

For example, the UE may apply a first "indicated TCI state (joint TCI state/DL (separate) TCI state)" out of the plurality of "indicated TCI states (joint TCI states/DL (separate) TCI states)" to a specific DL channel/signal (for example, an A-CSI-RS).

For example, the UE may apply the "indicated TCI state (joint TCI state/DL (separate) TCI state)" for the index related to the TRP having the first (or second) value (for example, 0 (or 1)) to a specific DL channel/signal (for example, an A-CSI-RS).

### <<Embodiment 4-3>>

One of Embodiments 4-1 and 4-2 described above may be selected/applied based on a specific condition.

The specific condition may be a condition based on the PCI associated with the "indicated TCI state(s)", for example.

For example, when one or all of (both of) the "indicated TCI states (joint TCI states/DL (separate) TCI states)" are associated with the PCI of the serving cell (that is, in a case of the intra-cell), the UE may determine to apply Embodiment 4-2 described above.

For example, when one or all of (both of) the "indicated TCI states (joint TCI states/DL (separate) TCI states)" are associated with the PCI different from the PCI of the serving cell (that is, in a case of the inter-cell), the UE may determine to apply Embodiment 4-1 described above.

Effects related to the present embodiment are similar to the effects described in Embodiment 3-3.

The UE may be permitted to receive at least one of the A-CSI-RS from one or all of (both of) the serving cells and the A-CSI-RS from a non-serving cell at the same time (time domain (for example, slot/symbol)).

When Embodiment 4-2 is applied in the inter-cell, the UE may switch to operation for the intra-cell. The base station may indicate the switching to the UE. The indication may be performed using RRC/MAC CE/DCI.

At least one of Embodiments 4-1 to 4-3 described above may be applied (only) when a specific RRC parameter is configured for the UE. Otherwise, the UE may apply the method described in the default QCL in Rel. 17 described above.

For example, the specific RRC parameter/configuration may be a parameter (for example, "enableTwoDefaultTCI-States") for enabling two default TCI states, or a specific parameter defined in Rel. 18 or later versions.

According to the fourth embodiment described above, the TCI state/QCL assumption can be appropriately applied to a DL channel/signal (for example, an A-CSI-RS) using the single-DCI multi-TRP.

### <Variations of Third/Fourth Embodiment>

The following will describe the TCI state corresponding to the lowest TCI codepoint selected by the UE described in the third/fourth embodiment (Embodiment 3-1/4-1).

### <<Indication of Joint TCI State>>

When the joint TCI state is indicated, one TCI codepoint may correspond to one or a plurality of (for example, two) TCI states.

In Embodiment 3-1/4-1, the lowest TCI codepoint determined by the UE may be the lowest TCI codepoint out of the TCI codepoints with which a plurality of (for example, two) TCI states are associated.

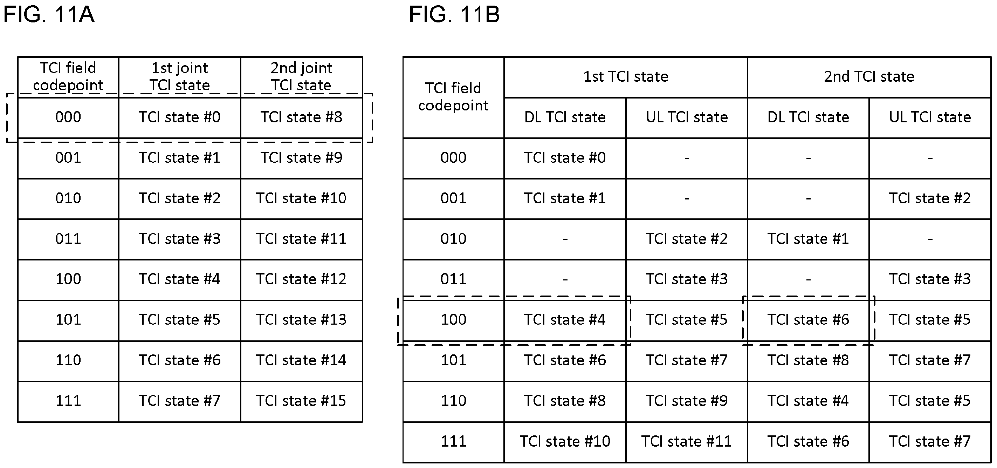

FIG. 11A is a diagram to show an example of a method of selecting the TCI codepoint when the joint TCI states are indicated. As shown in FIG. 11A, correspondence between the TCI codepoints and the joint TCI states (first/second joint TCI states) is configured for the UE.

From the correspondence, the UE uses the TCI states (that is, TCI state #0 as the first joint TCI state and TCI state #8 as the second joint TCI state) of the lowest TCI codepoint (in FIG. 11A, TCI codepoint "000") with which two joint TCI states are associated for one TCI codepoint.

### <<Indication of Separate TCI State>>

When the separate TCI state is indicated, one TCI codepoint may correspond to zero or more DL TCI states and zero or more UL TCI states.

In Embodiment 3-1/4-1, the lowest TCI codepoint determined by the UE may be the lowest TCI codepoint out of the TCI codepoints with which a plurality of (for example, two) DL TCI states are associated.

FIG. 11B is a diagram to show an example of a method of selecting the TCI codepoint when the DL TCI states are indicated. As shown in FIG. 11B, correspondence between the TCI codepoints and the TCI states (first/second UL/DL TCI states) is configured for the UE.

From the correspondence, the UE uses the TCI states (that is, TCI state #4 as the first DL TCI state and TCI state #6 as the second DL TCI state) of the lowest TCI codepoint (in FIG. 11B, TCI codepoint "100") with which two DL TCI states are associated for one TCI codepoint.

### <Fifth Embodiment>

In existing specifications (Rel. 15 to Rel. 17), regarding the A-CSI-RS whose scheduling (triggering) offset is smaller than a threshold, if another DL signal is present in the same symbol as the symbol of the A-CSI-RS, QCL assumption of the A-CSI-RS is derived based on the QCL of such another DL signal.

The present embodiment will describe a case in which another DL signal is present in the same symbol as the symbol of the A-CSI-RS regarding the A-CSI-RS whose scheduling (triggering) offset is smaller than the threshold when the unified TCI state is configured.

### <<Embodiment 5-1>>

A plurality of (for example, two) TCI states (joint/DL TCI states) may correspond to such another DL signal.

For example, such another DL signal may be a multi-TRP PDSCH having a plurality of active joint/DL TCI states (M-TRP PDSCH with multiple active joint/DL TCI states), or may be an SFN PDSCH having a plurality of joint/DL TCI states (SFN-PDSCH with multiple joint/DL TCI states).

The UE may apply one of the plurality of TCI states corresponding to such another DL signal to the A-CSI-RS.

The UE may select/determine one of the plurality of TCI states corresponding to such another DL signal, based on a specific method.

The specific method may be a method described in at least one of the following options 5-1-1 to 5-1-3.

### [Option 5-1-1]

The UE may select/determine one of the plurality of TCI states (joint/DL TCI states) corresponding to such another DL signal, based on DCI (triggering DCI) for triggering the A-CSI-RS.

For example, the UE may determine to apply QCL assumption of the DL signal corresponding to the index (for example, the TRP index/CORESET pool index) related to the TRP of the triggering DCI (the CORESET associated with the triggering DCI) to the A-CSI-RS.

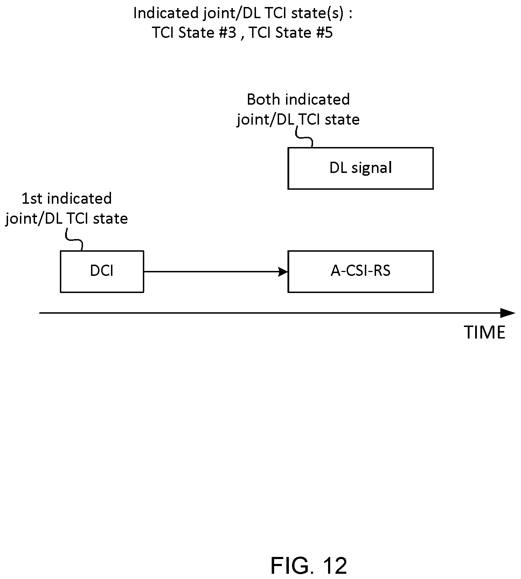

FIG. 12 is a diagram to show an example of application of the TCI states according to option 5-1-1. In the example shown in FIG. 12, for the UE, the A-CSI-RS is triggered by DCI. Another DL signal is present in the same symbol as the A-CSI-RS. Note that a time period from the DCI to the A-CSI-RS is smaller than a specific threshold.

In the example shown in FIG. 12, for the UE, TCI state #3 as the first indicated joint/DL TCI state and TCI state #5 as the second indicated joint/DL TCI state are indicated. In the example shown in FIG. 12, the DCI (CORESET) is configured/defined to follow the first indicated joint/DL TCI state, and another DL signal is configured/defined to follow both of the two indicated TCI states.

In this case, the UE applies the first indicated TCI state (TCI state #3) being the TCI state corresponding to the DCI to reception of the A-CSI-RS. In other words, the UE applies the first TCI state out of the two TCI states corresponding to another DL signal.

### [Variations of Option 5-1-1]

A plurality of (for example, two) "configured TCI states" may correspond to another DL signal.

Such another DL signal may be a PDSCH.

The PDSCH may correspond to a scheduling CORESET of a common search space (CSS). The CSS may be a CSS except the CSS of a specific type (for example, type 3). For the scheduling CORESET, an RRC parameter (for example, "followUnifiedTCIstate") indicating to follow the unified TCI state need not be configured.

The UE may apply a specific (for example, first )"configured TCI state" out of the plurality of "configured TCI states" to the A-CSI-RS.

### [Option 5-1-2]

The UE may select/determine one of the plurality of TCI states (joint/DL TCI states) corresponding to such another DL signal according to a specific rule.

For example, the UE may determine to apply the first (or second) TCI state of the plurality of TCI states corresponding to such another DL signal to the A-CSI-RS.

### [Option 5-1-3]

The UE may select/determine one of the plurality of TCI states (joint/DL TCI states) corresponding to such another DL signal, based on an RRC configuration.

For example, the UE may determine to apply QCL assumption of which TCI state of the plurality of TCI states corresponding to such another DL signal to the A-CSI-RS, using the RRC configuration.

### <<Embodiment 5-2>>

One TCI state (joint/DL TCI state) may correspond to such another DL signal.

For example, such another DL signal may be a single-TRP PDSCH having one active joint/DL TCI state (S-TRP PDSCH with one active joint/DL TCI states), or may be an aperiodic (A-)/semi-persistent (SP)/periodic (P-)CSI-RS.

### [Option 5-2-1]

The UE may apply one TCI state corresponding to such another DL signal to the A-CSI-RS.

### [Option 5-2-2]

The UE may be indicated with a plurality of (for example, two) "indicated TCI states".

The UE may select/determine one TCI state of the "indicated TCI states" and apply the TCI state to the A-CSI-RS, based on the index (for example, the TRP index/CORESET pool index) related to the TRP associated with the triggering DCI (option 5-2-2-1).

The UE may select/determine one TCI state of the "indicated TCI states" and apply the TCI state to the A-CSI-RS, based on a specific rule (option 5-2-2-2). For example, the specific rule may be that the UE selects/determines the first indicated TCI state out of the plurality of "indicated TCI states".

The UE may select/determine one TCI state of the "indicated TCI states" and apply the TCI state to the A-CSI-RS, based on RRC signaling (option 5-2-2-3).

Note that another DL signal in the fifth embodiment may be a DL signal (PDSCH/A-CSI-RS) satisfying that the scheduling (triggering) offset is equal to or more than a specific threshold.

According to the fifth embodiment described above, even when another DL signal is present in the same symbol as the symbol of the A-CSI-RS whose scheduling offset is smaller than the specific threshold, the TCI state/QCL to be applied to the A-CSI-RS can be determined.

### <Sixth Embodiment>

In existing specifications (Rel. 17 or earlier versions), the UE cannot assume different default QCLs for buffering the DL signal in different BWPs/CCs.

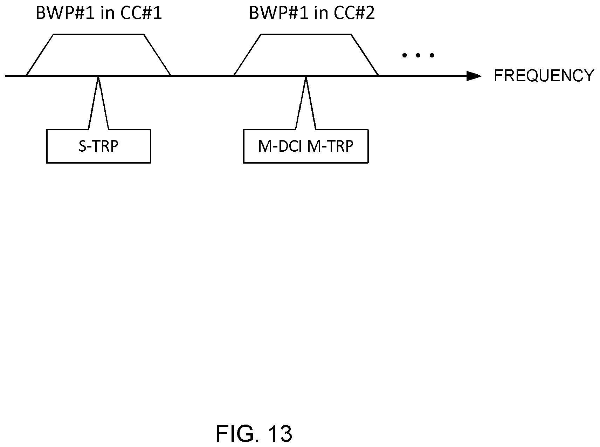

For example, the example shown in FIG. 13 shows a case in which the single TRP is configured in BWP #1 in CC #1 and the multi-DCI multi-TRP is configured in BWP #1 in CC #2.

Sufficient studies have not been carried out on operation of QCL assumption in the UE in such a case.

In the following, the present embodiment will describe operation of the UE that can support such a case.

The UE may receive a configuration related to a specific type. The specific type may be one of the single TRP, the multi-DCI multi-TRP, and the single-DCI multi-TRP.

The UE need not assume/expect to receive configurations of different types in one (same) band.

For example, the UE need not assume/expect to be configured with the single TRP in BWP #1 in CC #1 and configured with the multi-DCI multi-TRP in BWP #1 in CC #2.

In each BWP/CC, a configuration of the single-DCI multi-TRP and a configuration of the multi-DCI multi-TRP may be a configuration (enable parameter (enabler)) of default QCL in the single-DCI multi-TRP and a configuration (enable parameter (enabler)) of default QCL in the multi-DCI multi-TRP, respectively.

Regarding a plurality of (for example, all of) CCs/BWPs in one band, the UE may assume to apply QCL assumption (default QCL) of a specific BWP/CC ID in the band.

The specific BWP/CC ID may be the lowest (smallest) BWP/CC ID in the band, for example.

According to the sixth embodiment described above, even when a plurality of BWPs/CCs are used, QCL assumption can be appropriately performed.

### <Seventh Embodiment>

In the HST-SFN scheme in Rel. 17, sufficient studies have not been carried out on operation of the UE when the DL signal in the same symbol as the symbol of the A-CSI-RS is a PDSCH having two TCI states.

In the following, the present embodiment will describe operation of the UE in such a case.

Regarding the A-CSI-RS whose scheduling (triggering) offset is smaller than a threshold, another DL signal may be present in the same symbol as the symbol of the A-CSI-RS.

Such another DL signal may be a PDSCH having a plurality of (for example, two) TCI states (PDSCH with multiple (two) TCI states).

In this case, the UE may apply the first TCI state of the plurality of TCI states of the PDSCH to reception of the A-CSI-RS.

According to the seventh embodiment described above, even when the HST-SFN scheme is used, QCL assumption can be appropriately performed.

### <Supplements>

At least one of the embodiments described above may be applied only to the UE that has reported a specific UE capability or that supports the specific UE capability.

The specific UE capability may indicate at least one of the following:
- Support specific processing/operation/control/information regarding at least one of the embodiments described above (for example, at least one of the unified TCI state, application of the default QCL/TCI state, application of the default QCL/TCI state in the unified TCI state, and application of the default QCL/TCI state in the HST/SFN).

The specific UE capability may be a capability applied to all of the frequencies (in common regardless of a frequency), may be a capability for each frequency (for example, one of or a combination of a cell, a band, a band combination, BWP, a component carrier, and the like), may be a capability for each frequency range (for example, Frequency Range 1 (FR1), FR2, FR3, FR4, FR5, FR2-1, FR2-2), may be a capability for each subcarrier spacing (SCS), or may be a capability for each Feature Set (FS) or Feature Set Per Component-carrier (FSPC).

The specific UE capability may be a capability applied to all of the duplex schemes (in common regardless of a duplex scheme), or may be a capability for each duplex scheme (for example, time division duplex (TDD), frequency division duplex (FDD)).

At least one of the embodiments described above may be applied when the UE is configured with specific information related to the embodiments described above using higher layer signaling. For example, the specific information may be information indicating enabling of the default TCI state, information indicating enabling of the default TCI state for the unified TCI state, any RRC parameter for a specific release (for example, Rel. 18), or the like.

When the UE does not support at least one of the specific UE capabilities or is not configured with the specific information, the UE may apply Rel-15/16 operation, for example.

### (Supplementary Note A)

Regarding one embodiment of the present disclosure, the following supplementary notes of the invention will be given.

### [Supplementary Note A-1]

A terminal including: a receiving section that receives a configuration parameter related to a unified transmission configuration indication (TCI) state, and receives an indication related to the unified TCI state and downlink control information (DCI) for scheduling or triggering a downlink (DL) signal; and a control section that, when a control resource set (CORESET) pool index having a plurality of values is configured and a value of a time period from reception of the DCI to reception of the DL signal is smaller than a threshold, determines a TCI state or quasi co-location (QCL assumption) to be applied to the specific DL signal, based on the TCI state or the QCL assumption corresponding to a specific one of the CORESET pool index.

### [Supplementary Note A-2]

The terminal according to supplementary note A-1, wherein the control section applies the QCL assumption corresponding to a lowest CORESET ID of a same CORESET pool index in a latest monitoring slot to the DL signal.

### [Supplementary Note A-3]

The terminal according to supplementary note A-1 or A-2, wherein when the DL signal is a physical downlink shared channel (PDSCH), the control section applies a plurality of unified TCI states respectively corresponding to the CORESET pool index having the plurality of values to the PDSCH, and when the DL signal is an aperiodic channel state information reference signal (A-CSI-RS), the control section applies one unified TCI state corresponding to one of the CORESET pool index having the plurality of values to the A-CSI-RS.

### [Supplementary Note A-4]

The terminal according to any one of supplementary notes A-1 to A-3, wherein when the unified TCI state based on the indication is associated with a same physical cell ID as a physical cell ID of a serving cell, the control section applies at least one unified TCI state corresponding to the CORESET pool index having the plurality of values to the DL signal, and when the unified TCI state based on the indication is associated with a physical cell ID different from the physical cell ID of the serving cell, the control section applies the QCL assumption corresponding to a lowest CORESET ID of a same CORESET pool index in a latest monitoring slot to the DL signal.

### (Supplementary Note B)

Regarding one embodiment of the present disclosure, the following supplementary notes of the invention will be given.

### [Supplementary Note B-1]

A terminal including: a receiving section that receives a configuration parameter related to a unified transmission configuration indication (TCI) state, and receives an indication related to the unified TCI state and downlink control information (DCI) for scheduling or triggering a downlink (DL) signal; and a control section that, when at least one TCI codepoint corresponds to a plurality of TCI states and a value of a time period from reception of the DCI to reception of the DL signal is smaller than a threshold, determines a TCI state or QCL assumption to be applied to the specific DL signal, based on the TCI state corresponding to a specific TCI codepoint or the unified TCI state corresponding to an index related to a specific transmission/reception point (TRP).

### [Supplementary Note B-2]

The terminal according to supplementary note B-1, wherein the control section applies the TCI state of a lowest TCI codepoint corresponding to a plurality of different TCI states to the DL signal.

### [Supplementary Note B-3]

The terminal according to supplementary note B-1 or B-2, wherein when the DL signal is a physical downlink shared channel (PDSCH), the control section applies a plurality of unified TCI states respectively corresponding to the index related to the TRP having a plurality of values to the PDSCH, and when the DL signal is an aperiodic channel state information reference signal (A-CSI-RS), the control section applies one unified TCI state corresponding to one of the index related to the TRP having the plurality of values to the A-CSI-RS.

### [Supplementary Note B-4]

The terminal according to any one of supplementary notes B-1 to B-3, wherein when the unified TCI state based on the indication is associated with a same physical cell ID as a physical cell ID of a serving cell, the control section applies at least one unified TCI state corresponding to the index related to the TRP having a plurality of values to the DL signal, and when the unified TCI state based on the indication is associated with a physical cell ID different from the physical cell ID of the serving cell, the control section applies the TCI state of a lowest TCI codepoint corresponding to a plurality of different TCI states to the DL signal.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

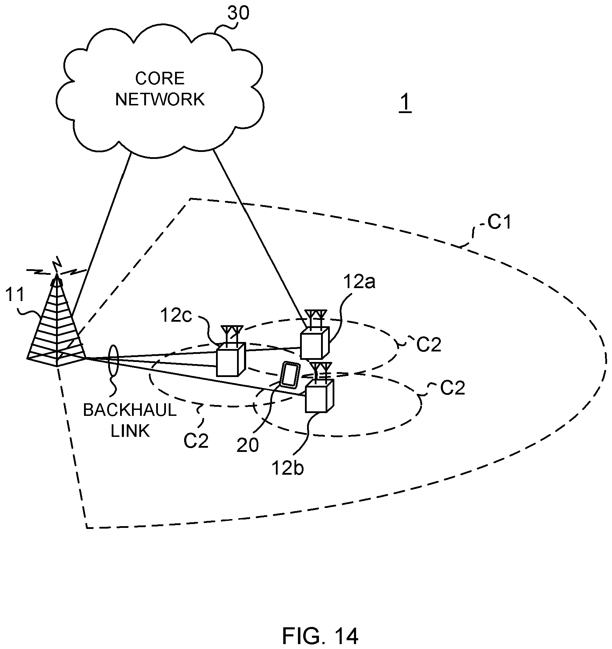

FIG. 14 is a diagram to show an example of a schematic structure of the radio communication system according to one embodiment. The radio communication system 1 (which may be simply referred to as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF) such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

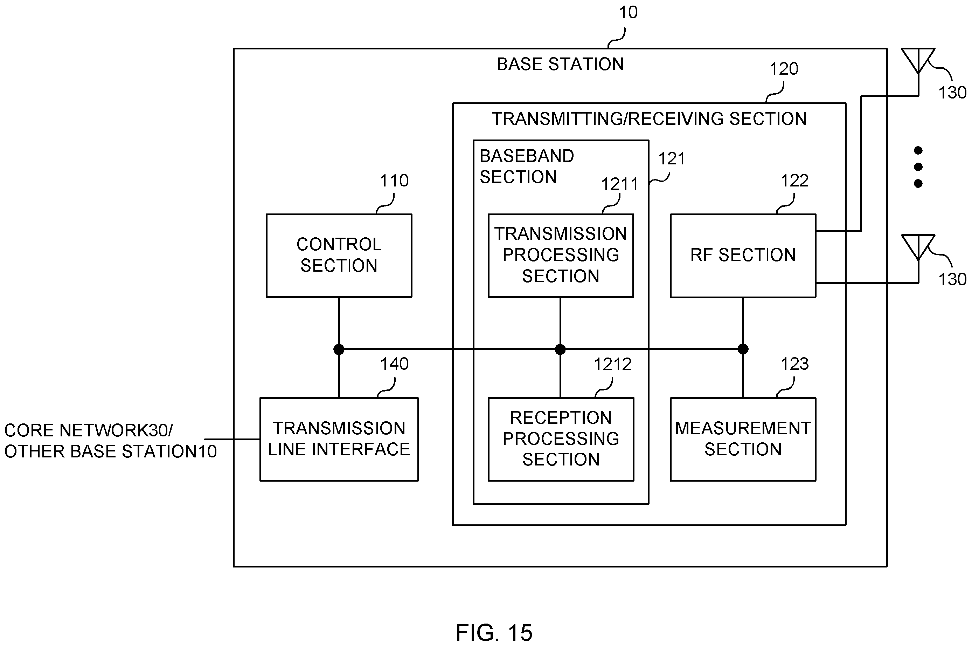

FIG. 15 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may transmit/receive (perform backhaul signaling of) a signal with an apparatus (for example, a network node providing NFs) included in the core network 30 or other base stations 10, and so on, and may acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a configuration parameter for a unified transmission configuration indication (TCI) state, and transmit an indication (for example, beam indication DCI/MAC CE) related to the unified TCI state and downlink control information (DCI) for scheduling or triggering a downlink (DL) signal. The control section 110 may, when a control resource set (CORESET) pool index having a plurality of values is configured and a value of a time period from reception of the DCI to reception of the DL signal is smaller than a threshold, indicate a TCI state or quasi co-location (QCL assumption) to be applied to the specific DL signal, based on the TCI state or the QCL assumption corresponding to a specific one of the CORESET pool index (first/second embodiment).

The transmitting/receiving section 120 may transmit a configuration parameter related to a unified transmission configuration indication (TCI) state, and transmit an indication (for example, beam indication DCI/MAC CE) related to the unified TCI state and downlink control information (DCI) for scheduling or triggering a downlink (DL) signal. The control section 110 may, when at least one TCI codepoint corresponds to a plurality of TCI states and a value of a time period from reception of the DCI to reception of the DL signal is smaller than a threshold, indicate a TCI state or QCL assumption to be applied to the specific DL signal, based on the TCI state corresponding to a specific TCI codepoint or the unified TCI state corresponding to an index related to a specific transmission/reception point (TRP) (third/fourth embodiment).

### (User Terminal)

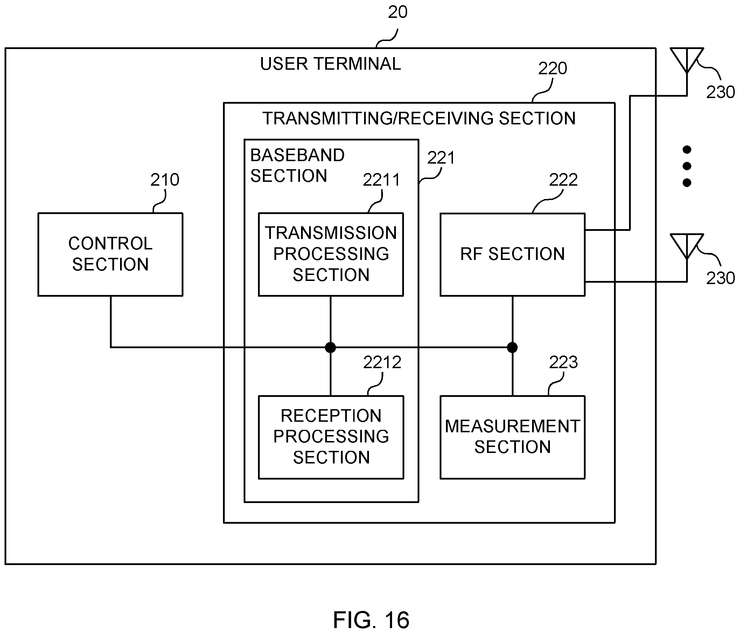

FIG. 16 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a configuration parameter related to a unified transmission configuration indication (TCI) state, and receive an indication (for example, beam indication DCI/MAC CE) related to the unified TCI state and downlink control information (DCI) for scheduling or triggering a downlink (DL) signal. When a control resource set (CORESET) pool index having a plurality of values is configured and a value of a time period from reception of the DCI to reception of the DL signal is smaller than a threshold, a TCI state or quasi co-location (QCL assumption) to be applied to the specific DL signal may be determined based on the TCI state or the QCL assumption corresponding to a specific one of the CORESET pool index (first/second embodiment).

The control section 210 may apply the QCL assumption corresponding to a lowest CORESET ID of a same CORESET pool index in a latest monitoring slot to the DL signal (first/second embodiment).

When the DL signal is a physical downlink shared channel (PDSCH), the control section 210 may apply a plurality of unified TCI states respectively corresponding to the CORESET pool index having the plurality of values to the PDSCH (first embodiment). When the DL signal is an aperiodic channel state information reference signal (A-CSI-RS), the control section 210 may apply one unified TCI state corresponding to one of the CORESET pool index having the plurality of values to the A-CSI-RS (second embodiment).

When the unified TCI state based on the indication is associated with a same physical cell ID as a physical cell ID of a serving cell, the control section 210 may apply at least one unified TCI state corresponding to the CORESET pool index having the plurality of values to the DL signal. When the unified TCI state based on the indication is associated with a physical cell ID different from the physical cell ID of the serving cell, the control section 210 may apply the QCL assumption corresponding to a lowest CORESET ID of a same CORESET pool index in a latest monitoring slot to the DL signal (third/fourth embodiment).

The transmitting/receiving section 220 may receive a configuration parameter related to a unified transmission configuration indication (TCI) state, and receive an indication (for example, beam indication DCI/MAC CE) related to the unified TCI state and downlink control information (DCI) for scheduling or triggering a downlink (DL) signal. The control section 210 may, when at least one TCI codepoint corresponds to a plurality of TCI states and a value of a time period from reception of the DCI to reception of the DL signal is smaller than a threshold, determine a TCI state or QCL assumption to be applied to the specific DL signal, based on the TCI state corresponding to a specific TCI codepoint or the unified TCI state corresponding to an index related to a specific transmission/reception point (TRP) (third/fourth embodiment).

The control section 210 may apply the TCI state of a lowest TCI codepoint corresponding to a plurality of different TCI states to the DL signal (third/fourth embodiment).

When the DL signal is a physical downlink shared channel (PDSCH), the control section 210 may apply a plurality of unified TCI states respectively corresponding to the index related to the TRP having a plurality of values to the PDSCH (third embodiment). When the DL signal is an aperiodic channel state information reference signal (A-CSI-RS), the control section 210 may apply one unified TCI state corresponding to one of the index related to the TRP having the plurality of values to the A-CSI-RS (fourth embodiment).

When the unified TCI state based on the indication is associated with a same physical cell ID as a physical cell ID of a serving cell, the control section 210 may apply at least one unified TCI state corresponding to the index related to the TRP having a plurality of values to the DL signal. When the unified TCI state based on the indication is associated with a physical cell ID different from the physical cell ID of the serving cell, the control section 210 may apply the TCI state of a lowest TCI codepoint corresponding to a plurality of different TCI states to the DL signal (third/fourth embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

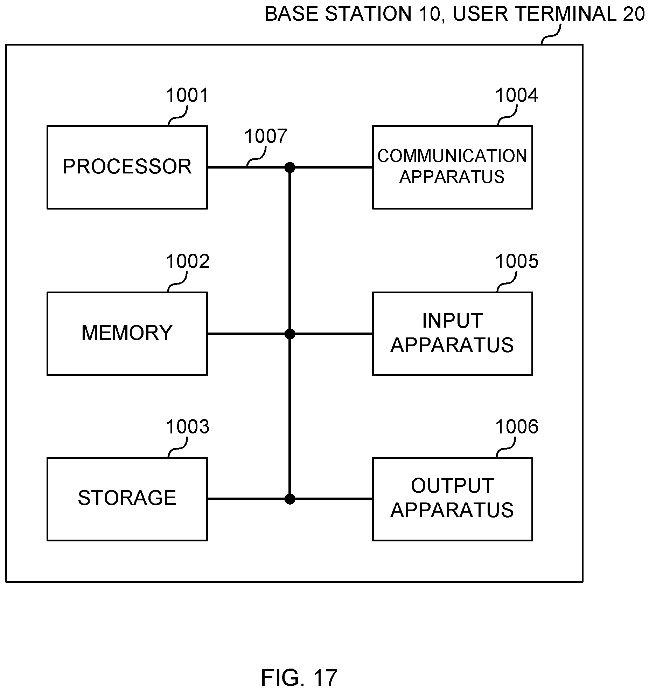

For example, a base station, a user terminal, and so on according to one embodiment of the present disclosure may function as a computer that executes the processes of the radio communication method of the present disclosure. FIG. 17 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, a case that a base station transmits information to a terminal may be interchangeably interpreted as a case that the base station indicates, for the terminal, control/operation based on the information.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

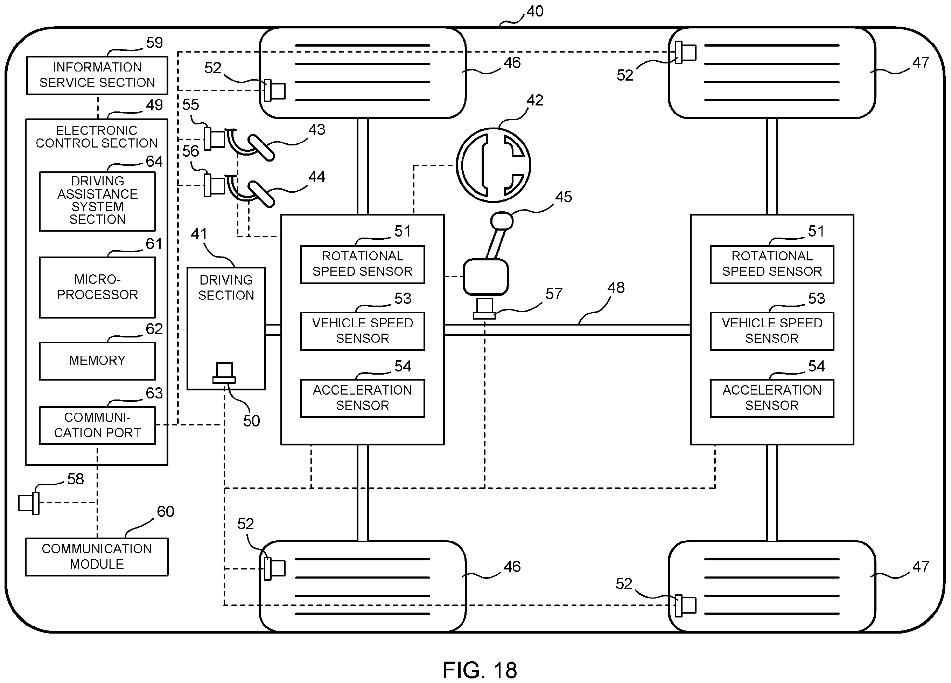

FIG. 18 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, intervehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel, and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and noninclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

In the present disclosure, "equal to or smaller than," "smaller than," "equal to or larger than," "larger than," "equal to," and the like may be interchangeably interpreted. In the present disclosure, words such as "good," "poor," "large," "small," "high," "low," "early," "late," "wide," "narrow," and the like may be interchangeably interpreted irrespective of positive degree, comparative degree, and superlative degree. In the present disclosure, expressions obtained by adding "i-th" (i is any integer) to words such as "good," "poor," "large," "small," "high," "low," "early," "late," "wide," "narrow," and the like may be interchangeably interpreted irrespective of positive degree, comparative degree, and superlative degree (for example, "highest" may be interpreted as "i-th highest," and vice versa).

In the present disclosure, "of," "for," "regarding," "related to," "associated with," and the like may be interchangeably interpreted.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives a configuration parameter related to a unified transmission configuration indication (TCI) state, and receives an indication related to the unified TCI state and downlink control information (DCI) for scheduling or triggering a downlink (DL) signal; and
a control section that, when at least one TCI codepoint corresponds to a plurality of TCI states and a value of a time period from reception of the DCI to reception of the DL signal is smaller than a threshold, determines a TCI state or QCL assumption to be applied to a specific DL signal, based on the TCI state corresponding to a specific TCI codepoint or the unified TCI state corresponding to an index related to a specific transmission/reception point (TRP).

2. The terminal according to claim 1, wherein
the control section applies the TCI state of a lowest TCI codepoint corresponding to a plurality of different TCI states to the DL signal.

3. The terminal according to claim 1, wherein
when the DL signal is a physical downlink shared channel (PDSCH), the control section applies a plurality of unified TCI states respectively corresponding to the index related to the TRP having a plurality of values to the PDSCH, and
when the DL signal is an aperiodic channel state information reference signal (A-CSI-RS), the control section applies one unified TCI state corresponding to one of the index related to the TRP having the plurality of values to the A-CSI-RS.

4. The terminal according to claim 1, wherein
when the unified TCI state based on the indication is associated with a same physical cell ID as a physical cell ID of a serving cell, the control section applies at least one unified TCI state corresponding to the index related to the TRP having a plurality of values to the DL signal, and
when the unified TCI state based on the indication is associated with a physical cell ID different from the physical cell ID of the serving cell, the control section applies the TCI state of a lowest TCI codepoint corresponding to a plurality of different TCI states to the DL signal.

5. A radio communication method for a terminal, the radio communication method comprising:
receiving a configuration parameter related to a unified transmission configuration indication (TCI) state, and receiving an indication related to the unified TCI state and downlink control information (DCI) for scheduling or triggering a downlink (DL) signal; and
when at least one TCI codepoint corresponds to a plurality of TCI states and a value of a time period from reception of the DCI to reception of the DL signal is smaller than a threshold, determining a TCI state or QCL assumption to be applied to a specific DL signal, based on the TCI state corresponding to a specific TCI codepoint or the unified TCI state corresponding to an index related to a specific transmission/reception point (TRP).

6. A base station comprising:
a transmitting section that receives a configuration parameter related to a unified transmission configuration indication (TCI) state, and transmits an indication related to the unified TCI state and downlink control information (DCI) for scheduling or triggering a downlink (DL) signal; and
a control section that, when at least one TCI codepoint corresponds to a plurality of TCI states and a value of a time period from reception of the DCI to reception of the DL signal is smaller than a threshold, indicates a TCI state or QCL assumption to be applied to a specific DL signal, based on the TCI state corresponding to a specific TCI codepoint or the unified TCI state corresponding to an index related to a specific transmission/reception point (TRP).
